# EUROPÄISCHE PATENTSCHRIFT

(11) **EP 3 536 173 B1**
(45) Veröffentlichungstag und Bekanntmachung des Hinweises auf die Patenterteilung: **30.09.2020**
(21) Anmeldenummer: 19160193.9
(22) Anmeldetag: 01.03.2019
(51) Int. Cl.: A24C 5/32

(54) **FÖRDERTROMMEL DER TABAK VERARBEITENDEN INDUSTRIE**
TRANSPORT DRUM FOR THE TOBACCO PROCESSING INDUSTRY
TAMBOUR DE TRANSPORT DE L'INDUSTRIE DE TRAITEMENT DU TABAC

(30) Priorität: 05.03.2018 DE 102018104956
(43) Veröffentlichungstag der Anmeldung: 11.09.2019
(73) Patentinhaber: Hauni Maschinenbau GmbH, 21033 Hamburg (DE)
(72) Erfinder: JONAT, Ilmar, 22159 Hamburg (DE); VON BABKA-GOSTOMSKI, Philipp, 21029 Hamburg (DE); HOFMANN, Nils, 21029 Hamburg (DE); TRACHT, Knut, 21493 Schwarzenbek (DE)
(74) Vertreter: Seemann & Partner Patentanwälte mbB

(56) Entgegenhaltungen:
- WO-A1-2006/056271
- DE-A1-102011 083 029

## Beschreibung

Die Erfindung betrifft eine Schiebetrommel der Tabak verarbeitenden Industrie mit Aufnahmemulden für stabförmige Artikel der Tabak verarbeitenden Industrie, insbesondere Filterstäbe und/oder Filterstücke und/oder segmentierte Produkte.

Ferner betrifft die Erfindung eine Verwendung einer Schiebetrommel der Tabak verarbeitenden Industrie sowie eine Maschine der Tabak verarbeitenden Industrie, insbesondere Filteransetzmaschine oder Filterherstellungsmaschine.

Außerdem betrifft die Erfindung ein Verfahren zum queraxialen Fördern von stabförmigen Artikeln der Tabak verarbeitenden Industrie, insbesondere Filterstäbe und/oder Filterstücke und/oder segmentierte Produkte.

In Maschinen der Tabak verarbeitenden Industrie, insbesondere Filteransetzmaschinen oder Maschinen zur Herstellung von alternativen Rauchprodukten wie z.B. Heat-Not-Burn-Produkten oder E-Zigaretten, werden Fördertrommeln eingesetzt, um Zigaretten, Filterstücke oder deren Komponenten zu transportieren.

Das Fördern der vorgenannten stabförmigen Gegenstände während der Herstellung von Zigaretten, Filtern sowie Filterzigaretten oder sogenannten Heat-Not-Burn-Produkten oder E-Zigaretten wird bei modernen Produktionsmaschinen der Tabak verarbeitenden Industrie im Allgemeinen mittels Fördertrommeln durchgeführt, deren Mantelfläche bzw. deren Trommelkörper zum queraxialen Fördern von stabförmigen Gegenständen (Zigaretten, Filterstäben oder Filterstopfen, Filterzigaretten) mit Nuten oder Aufnahmemulden zum Aufnehmen der stabförmigen Gegenstände versehen ist. Die Aufnahmemulden weisen hierbei einen Muldengrund auf.

Während der Förderung sind diese stabförmigen Artikel der Tabak verarbeitenden Industrie in Aufnahmemulden im Allgemeinen in Reihen queraxial hintereinander angeordnet.

Darüber hinaus sind als Fördertrommeln auch Schiebetrommeln z.B. in Filterzuführeinrichtungen an Filteransetzmaschinen bekannt, auf denen Filterstopfen als stabförmige Artikel längsaxial verschoben werden. Hierbei werden an einer mehrere Transporttrommeln aufweisenden Filterzuführeinrichtung mehrfachlange Filterstäbe aus einem Filterstabmagazin entnommen und in doppeltlange Filterstopfen auf einer Schneidtrommel geschnitten. Nach dem Schneiden werden die Filterstopfen auf einer Staffeltrommel gestaffelt, d.h. jeder geschnittene Filterstopfen wird separat in einer Mulde der Staffeltrommel versetzt zum nächsten Filterstopfen angeordnet. Im Anschluss daran werden die gestaffelten Filterstopfen in einem Verfahrensschritt auf einer Schiebetrommel in den Aufnahmemulden längsaxial verschoben, so dass die Filterstopfen danach in einer Reihe in queraxialer Richtung hintereinander ausgerichtet werden bzw. sind, wodurch die in der Reihe hintereinander angeordneten und ausgerichteten Filterstopfen von der Schiebetrommel an eine nachfolgende Fördertrommel übergeben werden.

Diese Trommeln werden üblicherweise im Zuge der Konfektionierung von Filterstäben und von Filterzigaretten eingesetzt, wobei Filterstabkomponenten mehrfacher Gebrauchslänge in einem so genannten Querverfahren, d.h. quer zu ihren Längsachsen, durch einmalige oder mehrmalige Unterteilung, Staffelung und Hintereinanderreihung für ihre nachfolgende Verbindung mit weiteren Filterkomponenten oder Rauchartikelkomponenten vorbereitet werden.

In EP 1 013 181 A2 ist eine Schiebe-/Schneidtrommel offenbart, wobei die Rauchartikelkomponenten bzw. Filterstücke in den Aufnahmemulden durch Anlegen von Saugluft an Saugbohrungen der Aufnahmen gegen längsverschiebbare Anschläge auf pneumatische Weise verschoben werden.

In GB 2 267 021 A ist eine Filteransetzmaschine beschrieben, bei der aus zwei Magazinen jeweils Filterstäbe entnommen werden. Nach der Entnahme eines ersten Filterstabs wird dieser Filterstab mittig geschnitten und queraxial auseinandergeschoben. Anschließend wird ein zweiter Filterstab aus dem anderen Magazin mittig zwischen die Abschnitte des ersten Filterstabs eingesetzt. Diese Filterstabanordnung wird nachfolgend auf Trommeln jeweils geschnitten, gestaffelt und geschoben. Dieser Vorgang "Schneiden, Staffeln und Verschieben der Filterstücke" wird wiederholt und somit insgesamt zweimal ausgeführt. Der resultierende Kombinationsfilter aus den zwei verschiedenen Filterstäben wird nachfolgend einer Zusammenstelltrommel mit Zigarettenstäben übergeben.

In US 5,984,851 wird ebenfalls eine Filterzuführung in einer Filteransetzmaschine beschrieben. Hierfür werden die Filter bzw. Filterstücke, die auch als Filterstopfen bezeichnet werden, mehrmals nacheinander auf den Trommeln geschnitten, gestaffelt und verschoben. Mittels der offenbarten Zuführeinrichtung können den Zigarettengruppen Einfach- oder Dualfilter zugestellt werden.

Außerdem ist in WO 2006/056271 A1 eine Einstoßtrommel beschrieben, wobei erste Aufnahmen für stabförmige Artikel auf einem ersten Ring bzw. Trommelkörper und einem zweiten Ring bzw. Trommelkörper vorgesehen sind.

Ferner offenbart DE 10 2011 083 029 A1 eine Rotationsfördervorrichtung in Form einer Fördertrommel mit einem zylinderförmigen Mantel. Auf dem Mantel sind Folien lösbar befestigt, wobei die Folien ausgebildet sind, auf ihren Außenseiten stabförmige Artikel zu fördern.

Eine weitere als Schiebetrommel ausgebildete Fördertrommel ist in EP 3 141 134 A2 beschrieben.

Ausgehend von diesem Stand der Technik besteht die Aufgabe der Erfindung darin, bei der Förderung von stabförmigen Artikeln, beispielsweise an einer Filterzuführeinrichtung, die Prozesssicherheit während der queraxialen Förderung von Filterstücken oder dergleichen zu erhöhen, wobei der konstruktive Aufwand möglichst gering gehalten werden soll.

Gelöst wird diese Aufgabe durch eine Schiebetrommel der Tabak verarbeitenden Industrie mit Aufnahmemulden für stabförmige Artikel der Tabak verarbeitenden Industrie, insbesondere Filterstäbe und/oder Filterstücke und/oder segmentierte Produkte, wobei die Schiebetrommel um eine Rotationsachse rotierbar ist, wobei die Schiebetrommel zwei nebeneinander angeordnete Reihen von in Umfangsrichtung queraxial hintereinander angeordneten Aufnahmemulden aufweist, wobei die Schiebetrommel eingerichtet ist, dass während der oder bei Förderung der stabförmigen Artikel in queraxialer Richtung die stabförmigen Artikel in den Aufnahmemulden einer Reihe oder in den Aufnahmemulden beider Reihen längsaxial verschiebbar sind oder verschoben werden, wobei die Aufnahmemulden beider Reihen jeweils einen Muldengrund aufweisen, wobei wenigstens im Bereich der Enden der Aufnahmemulden der ersten Reihe und der Enden der Aufnahmemulden der zweiten Reihe, die einander gegenüber angeordnet sind, der radiale Abstand des Muldengrunds der Aufnahmemulden der ersten Reihe zur Rotationsachse und der radiale Abstand des Muldengrunds der Aufnahmemulden der zweiten Reihe zur Rotationsachse verschieden sind, wobei die Aufnahmemulden der ersten Reihe, deren radialer Abstand des Muldengrunds der Aufnahmemulden zur Rotationsachse der Schiebetrommel größer als der radiale Abstand des Muldengrunds der Aufnahmemulden der zweiten Reihe zur Rotationsachse der Schiebetrommel ist, jeweils als seitliche Begrenzungen für die Aufnahmemulden der zweiten Reihe wenigstens im Bereich der Enden der Aufnahmemulden der ersten Reihe und der Enden der Aufnahmemulden der zweiten Reihe, die einander gegenüber angeordnet sind, ausgebildet sind.

Die Erfindung beruht auf dem Gedanken, dass bei der Schiebetrommel zwischen den Aufnahmemulden der ersten Reihe und den Aufnahmemulden der zweiten Reihe in Bezug auf die Längserstreckung der Aufnahmemulden, in denen die stabförmigen Artikel längsaxial verschiebbar sind, eine mechanische Barriere ausgebildet ist. Hierbei ist im Bereich der einander gegenüber liegend angeordneten Aufnahmemulden der ersten Reihe und der zweiten Reihe als mechanische Barriere eine Stufe zwischen den Aufnahmemulden der ersten Reihe und den Aufnahmemulden der zweiten Reihe vorgesehen, so dass bei Aufnahme von stabförmigen Artikeln in den Aufnahmemulden der ersten Reihe und in den Aufnahmemulden der zweiten Reihe die stabförmigen Artikel in den Aufnahmemulden mit dem größeren radialen Abstand des Muldengrunds zur Rotationsachse im Vergleich oder in Bezug zu den benachbarten stabförmigen Artikeln in den anderen Aufnahmemulden der anderen Reihe versetzt angeordnet sind.

Darüber hinaus ist es im Rahmen der Erfindung möglich, dass im Falle, dass stabförmige Artikel mit unterschiedlichen Durchmessern, insbesondere Außendurchmessern, auf der Schiebetrommel gefördert werden, dass stabförmige Artikel mit dem kleineren Durchmesser in den Aufnahmemulden der einen Reihe mit dem größeren radialen Abstand des Muldengrunds der Aufnahmemulden zur Rotationsachse angeordnet werden, während die stabförmigen Artikel mit dem größeren Durchmesser, insbesondere Außendurchmesser, in den Aufnahmemulden der anderen Reihe mit dem kleineren radialen Abstand des Muldengrunds der Aufnahmemulden zur Rotationsachse angeordnet sind. Dadurch ist es möglich, dass die Mittenlängsachsen der in zwei Reihen nebeneinander geförderten stabförmigen Artikel, die unterschiedlich groß im Durchmesser sind, kollinear zueinander ausgerichtet sind, so dass die Mittenlängsachsen des stabförmigen Artikels mit dem kleineren Durchmesser und die Mittenlängsachsen der stabförmigen Artikel mit dem größeren Außendurchmesser auf demselben Teilkreis gefördert werden.

Darüber hinaus zeichnet sich eine Ausführungsform der Schiebetrommel dadurch aus, dass die Aufnahmemulden der ersten Reihe und die Aufnahmemulden der zweiten Reihe in einem vorbestimmten Abstand in axialer Richtung voneinander beabstandet sind, wobei insbesondere zwischen den Aufnahmemulden der ersten Reihe und den Aufnahmemulden der zweiten Reihe ein in Umfangsrichtung der Schiebetrommel umlaufender Spalt vorgesehen ist.

Vorzugsweise beträgt die axiale Breite des Spaltes zwischen den einander gegenüberliegenden Enden der Aufnahmemulden der ersten und der zweiten Reihe zwischen 1,0 und 10,0 mm, vorzugsweise zwischen 1,0 und 7,0 mm. Die Höhe des Spaltes entspricht vorzugsweise mindestens der Höhe der Muldenstege.

Vorzugsweise ist der radiale Abstand des Muldengrunds der Aufnahmemulden der ersten Reihe zur Rotationsachse der Schiebetrommel entlang der Längserstreckung der Aufnahmemulden der ersten Reihe konstant. Hierbei ändert sich bei einem längsaxialen Verschieben von stabförmigen Artikeln in den Aufnahmemulden der ersten Reihe der radiale Abstand zwischen der Längsachse der stabförmigen Artikel, die parallel zur Rotationsachse der Schiebetrommel ausgerichtet sind, und der Rotationsachse der Schiebetrommel nicht während der Förderung der stabförmigen Artikel auf der Schiebetrommel.

Des Weiteren ist bei der Schiebetrommel vorteilhafterweise vorgesehen, dass der radiale Abstand des Muldengrunds der Aufnahmemulden der zweiten Reihe zur Rotationsachse der Schiebetrommel entlang der Längserstreckung der Aufnahmemulden zwischen den Enden der Aufnahmemulden der zweiten Reihe, die den Enden der Aufnahmemulden der ersten Reihe zugewandt sind, und den Enden der Aufnahmemulden der zweiten Reihe, die den Enden der Aufnahmemulden der ersten Reihe abgewandt sind, nicht konstant ist und/oder variiert. Hierdurch wird ermöglicht, dass bei einem längsaxialen Verschiebevorgang von stabförmigen Artikeln innerhalb der Aufnahmemulde der zweiten Reihe der Abstand der Mittenlängsachse der stabförmigen Artikel zur Rotationsache der Schiebetrommeln sich beim Verschiebevorgang in Längsrichtung der Aufnahmemulden verändert. Hierdurch ist es möglich, dass sich der radiale Abstand des Muldengrunds zur Rotationsachse entlang der Längserstreckung der Aufnahmemulden vergrößert oder verkleinert.

Darüber hinaus ist in einer alternativen Ausgestaltung vorgesehen, dass der radiale Abstand des Muldengrunds der Aufnahmemulden der zweiten Reihe zur Rotationsachse der Schiebetrommel entlang der Längserstreckung der Aufnahmemulden der zweiten Reihe konstant ist.

In einer Ausgestaltung der Schiebetrommel ist weiterhin vorgesehen, dass sich der radiale Abstand des Muldengrunds der Aufnahmemulden der zweiten Reihe zur Rotationsachse der Schiebetrommel in einem Bereich zwischen den Enden der Aufnahmemulden der zweiten Reihe, die den Enden der Aufnahmemulden der ersten Reihe zugewandt sind, und den Enden der Aufnahmemulden der zweiten Reihe, die den Enden der Aufnahmemulden der ersten Reihe abgewandt sind, entlang der Längserstreckung der Aufnahmemulden, vorzugsweise linear, vergrößert.

Überdies ist bei der Schiebetrommel in einer Weiterbildung vorgesehen, dass der Muldengrund der Aufnahmemulden der zweiten Reihe, deren radialer Abstand des Muldengrunds der Aufnahmemulden zur Rotationsachse der Schiebetrommel kleiner ist als der radiale Abstand des Muldengrunds der Aufnahmemulden der ersten Reihe zur Rotationsachse der Schiebetrommel wenigstens im Bereich der Enden der Aufnahmemulden der ersten Reihe und der Enden der Aufnahmemulden der zweiten Reihe, die einander gegenüber angeordnet sind, im Bereich der Enden, die von den Aufnahmemulden der ersten Reihe abgewandt sind, einen radialen Abstand zur Rotationsachse der Schiebetrommel aufweisen, der dem radialen Abstand des Muldengrunds der ersten Aufnahmemulden der ersten Reihe entspricht. Dadurch wird erreicht, dass beispielsweise bei der Abgabe von stabförmigen Artikeln aus den Aufnahmemulden der ersten Reihe und aus den Aufnahmemulden der zweiten Reihe an eine nachfolgende Schiebetrommel stabförmige Artikel derart ausgerichtet sind, dass ihre Mittenlängsachsen nach dem Verschiebevorgang der stabförmigen Artikel in den Aufnahmemulden kollinear ausgerichtet sind, wodurch der radiale Abstand der Mittenlängsachse der stabförmigen Artikel in den Aufnahmemulden der ersten Reihe zur Rotationsachse der Schiebetrommel und der radiale Abstand der stabförmigen Artikel in den Aufnahmemulden der zweiten Reihe zur Rotationsachse der Schiebetrommel, vorzugsweise bei der Abgabe an eine nachfolgende Schiebetrommel, gleich sind. Hierzu weisen die stabförmigen Artikel den gleichen Außendurchmesser auf.

Vorzugsweise weisen die Aufnahmemulden der ersten Reihe und die Aufnahmemulden der zweiten Reihe jeweils Muldenstege auf, wobei die Enden der Muldenstege der Aufnahmemulden der ersten Reihe den Enden der Muldenstege der Aufnahmemulden der zweiten Reihe einander gegenüberliegend angeordnet sind, wobei die Muldenstege der Aufnahmemulden der ersten Reihe fluchtend zu den Muldenstegen der Aufnahmemulden der zweiten Reihe angeordnet oder ausgerichtet sind.

Dazu ist in einer bevorzugten Ausführungsform weiterhin vorgesehen, dass die Muldenstege der Aufnahmemulden der ersten Reihe und die Muldenstege der Aufnahmemulden der zweiten Reihe im Bereich der Enden der Aufnahmemulden der ersten Reihe und der Enden der Aufnahmemulden der zweiten Reihe, die einander gegenüber angeordnet sind, in Bezug auf die Rotationsachse der Schiebetrommel unterschiedlich hoch sind. Durch diese Ausgestaltung ist es möglich, jeweils stabförmige Artikel von einer vorangehenden Schiebetrommel, z.B. Staffeltrommel, auf einfache und sichere Weise in die Aufnahmemulden der ersten Reihe und in die Aufnahmemulden der zweiten Reihe sicher zu überführen.

Gemäß einer weiteren Ausgestaltung der Schiebetrommeln ist es vorgesehen, dass die Muldenstege der Aufnahmemulden der zweiten Reihe, deren radialer Abstand des Muldengrunds der Aufnahmemulden zur Rotationsachse der Schiebetrommel kleiner ist als der radiale Abstand des Muldengrunds der Aufnahmemulden der ersten Reihe zur Rotationsachse der Schiebetrommel im Bereich der Enden der Aufnahmemulden der ersten Reihe und der Enden der Aufnahmemulden der zweiten Reihe, die einander gegenüber angeordnet sind, im Bereich der Enden der Aufnahmemulden der zweiten Reihe, die von den Aufnahmemulden der ersten Reihe abgewandt sind, in Bezug auf die Rotationsachse der Schiebetrommel die gleiche Höhe aufweisen wie die Muldenstege der Aufnahmemulden der ersten Reihe.

Ferner zeichnet sich eine Weiterbildung der Schiebetrommel dadurch aus, dass an den Enden der Aufnahmemulden der ersten Reihe, die von den Aufnahmemulden der zweiten Reihe abgewandt sind, jeweils seitliche Anschläge für die in den Aufnahmemulden der ersten Reihe angeordneten oder anordbaren stabförmigen Artikel vorgesehen sind und/oder dass an den Enden der Aufnahmemulden der zweiten Reihe, die von den Aufnahmemulden der ersten Reihe abgewandt sind, jeweils seitliche Anschläge für die in den Aufnahmemulden der zweiten Reihe angeordneten oder anordbaren stabförmigen Artikel vorgesehen sind. Dadurch ist es möglich, dass die in den Aufnahmemulden in Längsrichtung verschobenen oder verschiebbaren stabförmigen Artikel positionsgenau mittels der seitlichen Anschläge nach einem Verschieben innerhalb der Aufnahmemulden jeweils ausgerichtet sind.

Gemäß einer bevorzugten Ausführungsform der Schiebetrommel ist es vorgesehen, dass in den jeweiligen Bereichen der Aufnahmemulden der ersten Reihe, die von den Aufnahmemulden der zweiten Reihe abgewandt sind, jeweils in Längsrichtung der Aufnahmemulden der ersten Reihe Bewegungsorgane für die in den Aufnahmemulden der ersten Reihe angeordneten oder anordbaren stabförmigen Artikel vorgesehen sind, so dass die in den Aufnahmemulden der ersten Reihe angeordneten oder anordbaren stabförmigen Artikel in längsaxialer Richtung bewegt werden oder bewegbar sind, und/oder dass in den jeweiligen Bereichen der Aufnahmemulden der zweiten Reihe, die von den Aufnahmemulden der ersten Reihe abgewandt sind, jeweils in Längsrichtung der Aufnahmemulden der zweiten Reihe Bewegungsorgane für die in den Aufnahmemulden der zweiten Reihe angeordneten oder anordbaren stabförmigen Artikel vorgesehen sind, so dass die in den Aufnahmemulden der zweiten Reihe angeordneten oder anordbaren stabförmigen Artikel in längsaxialer Richtung bewegt werden oder bewegbar sind.

Weiterhin zeichnet sich eine Weiterbildung der Schiebetrommel dadurch aus, dass a.) in den jeweiligen Bereichen der Aufnahmemulden der ersten Reihe, die von den Aufnahmemulden der zweiten Reihe abgewandt sind, jeweils in Längsrichtung der Aufnahmemulden der ersten Reihe Bewegungsorgane für die in den Aufnahmemulden der ersten Reihe angeordneten oder anordbaren stabförmigen Artikel vorgesehen sind, so dass die in den Aufnahmemulden der ersten Reihe angeordneten oder anordbaren stabförmigen Artikel in längsaxialer Richtung bewegt werden oder bewegbar sind, und an den Enden der Aufnahmemulden der zweiten Reihe, die von den Aufnahmemulden der ersten Reihe abgewandt sind, jeweils seitliche Anschläge für die in den Aufnahmemulden der zweiten Reihe angeordneten oder anordbaren stabförmigen Artikel vorgesehen sind und/oder dass b.) in den jeweiligen Bereichen der Aufnahmemulden der zweiten Reihe, die von den Aufnahmemulden der ersten Reihe abgewandt sind, jeweils in Längsrichtung der Aufnahmemulden der zweiten Reihe Bewegungsorgane für die in den Aufnahmemulden der zweiten Reihe angeordneten oder anordbaren stabförmigen Artikel vorgesehen sind, so dass die in den Aufnahmemulden der zweiten Reihe angeordneten oder anordbaren stabförmigen Artikel in längsaxialer Richtung bewegt werden oder bewegbar sind, und an den Enden der Aufnahmemulden der ersten Reihe, die von den Aufnahmemulden der zweiten Reihe abgewandt sind, jeweils seitliche Anschläge für die in den Aufnahmemulden der ersten Reihe angeordneten oder anordbaren stabförmigen Artikel vorgesehen sind.

Durch diese Ausgestaltungen wird es ermöglicht, dass beispielsweise ein stabförmiger Artikel in einen Hohlraum eines zweiten stabförmigen Artikels eingebracht wird, wobei mittels des Bewegungsorgans der im äußeren Durchmesser kleinere stabförmige Artikel in den Hohlraum des im äußeren Durchmesser größeren stabförmigen Artikels eingebracht wird. Hierbei wird der kleinere stabförmige Artikel in längsaxialer Richtung des größeren stabförmigen Artikels längsaxial verschoben. Dadurch ist es möglich, dass die Schiebetrommel als Fügetrommel ausgebildet wird, so dass auf der Schiebetrommel durch Verschieben von stabförmigen Artikeln bzw. durch Ineinanderschieben der Artikel zusammengesetzte stabförmige Artikel auf der Schiebetrommel hergestellt werden. Beispielsweise sind die in koaxialer Richtung bewegbaren Bewegungsorgane als Stößel ausgebildet, die über eine Kurvensteuerung oder dergleichen Hubbewegungen in längsaxialer bzw. axialer Richtung ausführen.

Darüber hinaus ist es im Rahmen der Erfindung möglich, dass ein, vorzugsweise stabförmiger, Artikel, der, insbesondere in axialer Richtung, eine hohe Steifigkeit aufweist, mittels des Bewegungsorgans längsaxial verschoben wird und in einen, vorzugsweise weichen, stabförmigen Artikel, der keine Kavität für den verschobenen Artikel aufweist, in diesen eingebracht wird.

Des Weiteren zeichnet sich die Schiebetrommel in einer Ausgestaltung dadurch aus, dass die Aufnahmemulden der ersten Reihe jeweils eine Muldenkontur mit einer Fase, insbesondere eine bezogen auf die Förderrichtung der Schiebetrommel dem Muldengrund vorauseilende Fase, aufweisen und/oder dass die Aufnahmemulden der zweiten Reihe jeweils eine Muldenkontur mit einer Fase, insbesondere eine bezogen auf die Förderrichtung der Schiebetrommel dem Muldengrund vorauseilende Fase, aufweisen. Dadurch wird beispielsweise das Einbringen oder Ausbringen der stabförmigen Artikel in die oder aus den Aufnahmemulden erleichtert.

Besonders bevorzugt ist es bei der Schiebetrommel, dass zwischen einem Aufnahmebereich zum Aufnehmen von stabförmigen Artikeln in die Aufnahmemulden der ersten Reihe und in die Aufnahmemulden der zweiten Reihe von einer in Förderrichtung stromaufwärts vorgesehenen Schiebetrommel, insbesondere Staffeltrommel, und einem Übergabebereich zum Übergeben der auf der Schiebetrommel längsaxial verschobenen stabförmigen Artikel aus den Aufnahmemulden an eine nachfolgende Schiebetrommel, insbesondere eine zweite Schiebetrommel, mindestens eine Abdeckvorrichtung vorgesehen ist, wobei insbesondere die Abdeckvorrichtung eine Abdeckung für die Aufnahmemulden der ersten Reihe und eine Abdeckung für die Aufnahmemulden der zweiten Reihe aufweist. Vorzugsweise ist die Abdeckvorrichtung hierbei entlang dem Transferbereich zwischen dem Aufnahmebereich und dem Übergabebereich an der Schiebetrommel angeordnet, wodurch während der längsaxialen Verschiebung der stabförmigen Artikel in den Aufnahmemulden diese sicher geführt werden.

In einer bevorzugten Ausgestaltung weist die Abdeckvorrichtung, vorzugsweise an der den Aufnahmemulden der ersten Reihe und/oder der zweiten Reihe zugewandten Innenseite, wenigstens einen Stoppkörper für die in den Aufnahmemulden der ersten Reihe längsaxial verschiebbaren oder verschobenen stabförmigen Artikel auf und/oder einen Stoppkörper für die in den Aufnahmemulden der zweiten Reihe längsaxial verschiebbaren oder verschobenen stabförmigen Artikel auf. Durch den oder die Stoppkörper der Abdeckvorrichtung wird erreicht, dass die in den Aufnahmemulden der beiden Reihen angeordneten stabförmigen Artikel beim längsaxialen Verschiebevorgang in den jeweiligen Aufnahmemulden verbleiben. Der oder die Stoppkörper für die stabförmigen Artikel verlaufen wenigstens teilweise hierbei in einer Ausgestaltung an der der Schiebetrommel zugewandten Innenseite der ortsfesten Abdeckvorrichtung entlang der Umfangsrichtung der Schiebetrommel.

Des Weiteren ist es in einer Weiterbildung vorgesehen, dass eine Abdeckung für die Aufnahmemulden der ersten Reihe gegenüber einer Abdeckung für die Aufnahmemulden der zweiten Reihe im Bereich der Enden der Aufnahmemulden der ersten Reihe und der Enden der Aufnahmemulden der zweiten Reihe, die einander gegenüber angeordnet sind, in radialer Richtung versetzt zueinander angeordnet sind. Durch den radialen Versatz der beiden Abdeckungen im Bereich der einander zugewandten Enden der Aufnahmemulden der beiden Reihen wird eine Stoppeinrichtung für die stabförmigen Artikel auf der Schiebetrommel ausgebildet, so dass die in den Aufnahmemulden der beiden Reihen angeordneten stabförmigen Artikel beim längsaxialen Verschiebevorgang in den jeweiligen Aufnahmemulden verbleiben.

Ferner wird die Aufgabe gelöst durch eine Verwendung einer voranstehend beschriebenen Schiebetrommel der Tabak verarbeitenden Industrie mit Aufnahmemulden für stabförmige Artikel der Tabak verarbeitenden Industrie in einer Trommelanordnung zum queraxialen Fördern von stabförmigen Artikeln der Tabak verarbeitenden Industrie, insbesondere Filterstäbe und/oder Filterstücke und/oder segmentierte Produkte.

Dabei ist es in einer Ausgestaltung vorteilhaft, dass die voranstehend beschriebene Schiebetrommel als erste Schiebetrommel der Trommelanordnung ausgebildet ist und die Trommelanordnung eine zweite Schiebetrommel zum längsaxialen Verschieben der stabförmigen Artikel in Aufnahmemulden aufweist, wobei die stabförmigen Artikel nach längsaxialem Verschieben in den Aufnahmemulden auf der ersten Schiebetrommel nachfolgend von der ersten Schiebetrommel an die zweite Schiebetrommel übergeben werden oder übergebbar sind und die übergebenen stabförmigen Artikel auf der zweiten Schiebetrommel in den Aufnahmemulden der zweiten Schiebetrommel in längsaxialer Richtung verschiebbar sind oder verschoben werden, wobei insbesondere die zweite Schiebetrommel durchgehende Aufnahmemulden für die stabförmigen Artikel aufweist, wobei insbesondere zwischen den äußeren Randbereichen der Aufnahmemulden der zweiten Schiebetrommel wenigstens ein Anschlag, vorzugsweise zwei Anschläge, für die stabförmigen Artikel vorgesehen ist.

Ferner wird die Aufgabe gelöst durch eine Maschine der Tabak verarbeitenden Industrie, insbesondere Filteransetzmaschine oder Filterherstellungsmaschine, mit einer Schiebetrommel, wie voranstehend beschrieben, vorzugsweise für eine Filterzuführeinrichtung.

Des Weiteren wird die Aufgabe gelöst durch ein Verfahren zum queraxialen Fördern von stabförmigen Artikeln der Tabak verarbeitenden Industrie, insbesondere Filterstäbe und/oder aus Filterstäben geschnittene Filterstücke und/oder segmentierte Produkte, unter Verwendung einer voranstehend beschriebenen Schiebetrommel. Zur Vermeidung von Wiederholungen wird auf die obigen Ausführungen ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a: schematisch eine Trommelanordnung einer Filterzuführung einer Multifiltermaschine;
- Fig. 1b: schematisch ein Ablaufdiagramm zur Herstellung von Filterstopfen gemäß der Trommelanordnung aus Fig. 1a;
- Fig. 2a: schematisch eine perspektivische Ansicht einer Schiebetrommel;
- Fig. 2b: schematisch eine perspektivische Detailansicht der Schiebetrommel im Ausschnitt;
- Fig. 3a: schematisch eine Draufsicht auf die Schiebetrommel im Ausschnitt;
- Fig. 3b: schematisch einen Querschnitt durch die Schiebetrommel im Ausschnitt;
- Fig. 4a: schematisch eine Querschnittsansicht eines weiteren Ausführungsbeispiels einer erfindungsgemäßen Schiebetrommel im Ausschnitt;
- Fig. 4b: schematisch einen Querschnitt durch ein auf der Schiebetrommel hergestelltes stabförmiges Produkt der Tabak verarbeitenden Industrie;
- Fig. 5a: schematisch einen Querschnitt durch ein weiteres Ausführungsbeispiel der Schiebetrommel;
- Fig. 5b: schematisch mehrere Ansichten von auf der Schiebetrommel hergestellten stabförmigen Produkten im Querschnitt;
- Fig. 6a: schematisch eine Querschnittsansicht durch ein weiteres Ausführungsbeispiel der Schiebetrommel;
- Fig. 6b: schematisch einen Querschnitt eines auf der Schiebetrommel hergestellten stabförmigen Produkts,
- Fig. 7a: schematisch eine Querschnittsansicht eines weiteren Ausführungsbeispiels für eine erfindungsgemäße Schiebetrommel mit drei Reihen von Aufnahmemulden und
- Fig. 7b: ein auf der Schiebetrommel hergestelltes stabförmiges Produkt der Tabak verarbeitenden Industrie im Querschnitt.

In den Zeichnungen sind jeweils gleiche oder gleichartige Elemente und/oder Teile mit denselben Bezugsziffern versehen, so dass von einer erneuten Vorstellung jeweils abgesehen wird.

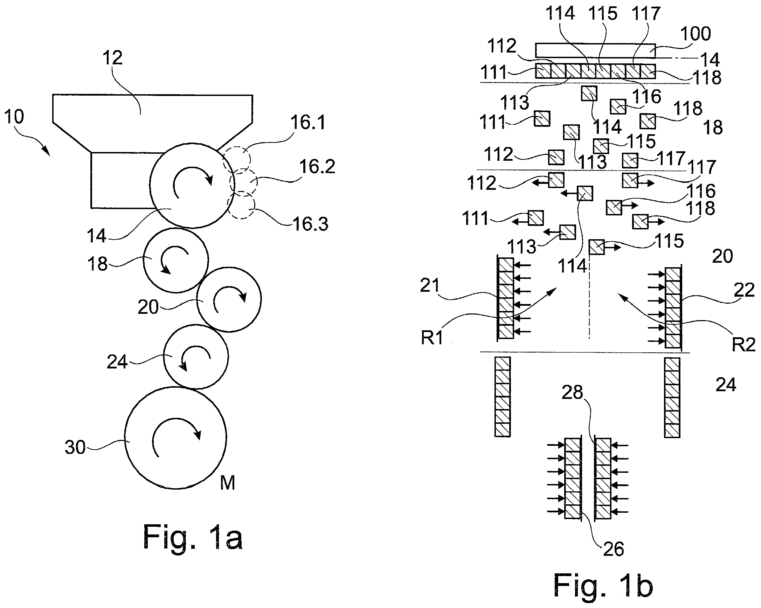

Fig. 1a zeigt schematisch eine Ansicht einer Filterzuführeinrichtung 10, wobei die Filterzuführeinrichtung 10 beispielsweise in einer schematisch bezeichneten Multifiltermaschine M integriert ist. Aus einem Magazin 12 mit Filterstäben 100 werden Filterstäbe 100 mittels einer Entnahmetrommel 14 entnommen und zu an der Entnahmetrommel 14 angeordneten Schneidmessern 16.1, 16.2, 16.3 transportiert, an denen die Filterstäbe 100 in mehrere doppelt lange Filterstopfen 111 bis 118 geschnitten werden. Es kann auch vorgesehen sein, dass die Filterstäbe 100 in einfach lange Filterstopfen 111 bis 118 geschnitten werden.

Bei dem in Fig. 1b dargestellten Ablaufdiagramm werden hierbei die Filterstäbe 100 in Filterstopfen 111 bis 118 auf der Entnahmetrommel geschnitten. Die Filterstopfen werden auch als Filterstücke bezeichnet.

Die geschnittenen Filterstopfen 111 bis 118 werden anschließend von der Entnahmetrommel 14 an eine Staffeltrommel 18 übergeben, auf der die Filterstopfen 111 bis 118 gestaffelt werden. Bei der Staffelung werden die einzelnen Filterstopfen 111 bis 118 auf der Staffeltrommel 18 längsaxial und queraxial zueinander versetzt angeordnet. Von der Staffeltrommel 18 werden die gestaffelt angeordneten Filterstopfen 111 bis 118 anschließend an eine erste Schiebetrommel 20 übergeben, so dass die Filterstopfen 111 bis 118 längsaxial nach außen auf der Schiebetrommel 20 verschoben werden, wobei an der Außenseite der Schiebetrommel 20 bzw. an den Aufnahmemulden 31, 32 der Schiebetrommel 20 entsprechende Positionsanschläge 22 angeordnet sind, so dass nach Verschieben der Filterstopfen 111 bis 118 die Filterstopfen 111 bis 118 in den Aufnahmemulden 31, 32 an den seitlichen Positionsanschlägen 22 angeordnet sind.

Die Schiebetrommel 20 weist zwei nebeneinander angeordnete Reihen R1, R2 mit Aufnahmemulden 31, 32 auf. Die Reihe R1 mit den Aufnahmemulden 31 nimmt die Filterstopfen 111 bis 114 auf, während die zweite Reihe R2 mit den Aufnahmemulden 32 die Filterstopfen 115 bis 118 aufnimmt. Während der queraxialen Förderung der Filterstopfen 111 bis 118 auf der Schiebetrommel 20 werden die Filterstopfen 111 bis 114 durch Beaufschlagung mit Saugluft längsaxial nach außen verschoben, sowie die in den Aufnahmemulden 32 der zweiten Reihe R2 aufgenommenen Filterstopfen 115 bis 118 ebenfalls nach außen in die entgegengesetzte Richtung verschoben. Die Aufnahmemulden 31 der ersten Reihe R1 und die Aufnahmemulden 32 der zweiten Reihe R2 sind nebeneinander zueinander in längsaxialer Richtung angeordnet. Beim längsaxialen Verschieben der Filterstopfen 111 bis 114 in den Aufnahmemulden 31 der ersten Reihe R1 werden die Filterstopfen 111 bis 114 nach außen gegen den Positionsanschlag 21 gefördert, während die Filterstopfen 115 bis 118 in den Aufnahmemulden 32 der zweiten Reihe R2 gegen den äußeren Positionsanschlag 22 verschoben werden.

Vor der Übergabe der Filterstopfen 111 bis 118 sind die Filterstopfen 111 bis 118 in längsaxialer Richtung an den äußeren Enden der Aufnahmemulden 31, 32 der ersten Reihe R1 und der zweiten Reihe R2 voneinander beabstandet. Anschließend werden die Filterstopfen 111 bis 118 von der Schiebetrommel 20 an eine weitere, zweite Schiebetrommel 24 in Aufnahmemulden der zweiten Schiebetrommel 24 übergeben, wobei auf der Schiebetrommel 24 die Filterstopfen 111 bis 114 sowie die Filterstopfen 115 bis 118 in längsaxialer Richtung in den durchgehenden Aufnahmenuten der zweiten Schiebetrommel 24 nach innen gegen Anschläge 26 und 28 verschoben werden. Danach werden die auf der zweiten Schiebetrommel 24 verschobenen Filterstopfen 111 bis 118 an eine weitere Schiebetrommel 30 paarweise übergeben.

Um die Filterstopfen 111 bis 114 von der Staffeltrommel 18 in die Aufnahmemulden 31 der ersten Reihe R1 zu übergeben, ist hierbei in einer Ausgestaltung an der Schiebetrommel 20 eine (nicht dargestellte) Auskämmeinrichtung angeordnet. Hierdurch werden die Filterstäbe 111 bis 114 sicher in die Aufnahmemulden 31 abgegeben. Des Weiteren ist für die sichere Übergabe der Filterstopfen 115 bis 118 von der Staffeltrommel 18 in die Aufnahmemulden 32 der zweite Reihe R2 in einer Ausgestaltung an der Schiebetrommel 20 eine (nicht dargestellte) Auskämmeinrichtung angeordnet bzw. vorgesehen.

Bei der Übergabe der Filterstopfen 111 bis 118 von der ersten Schiebetrommel 20 an die zweite Schiebetrommel 24 werden in einer durchgehenden Aufnahmemulde der Schiebetrommel 24 jeweils ein Filterstopfen aus den Aufnahmemulden 31 und jeweils ein Filterstopfen aus den Aufnahmemulden 32 in dieselbe Aufnahmemulde der Schiebetrommel 24 übergeben.

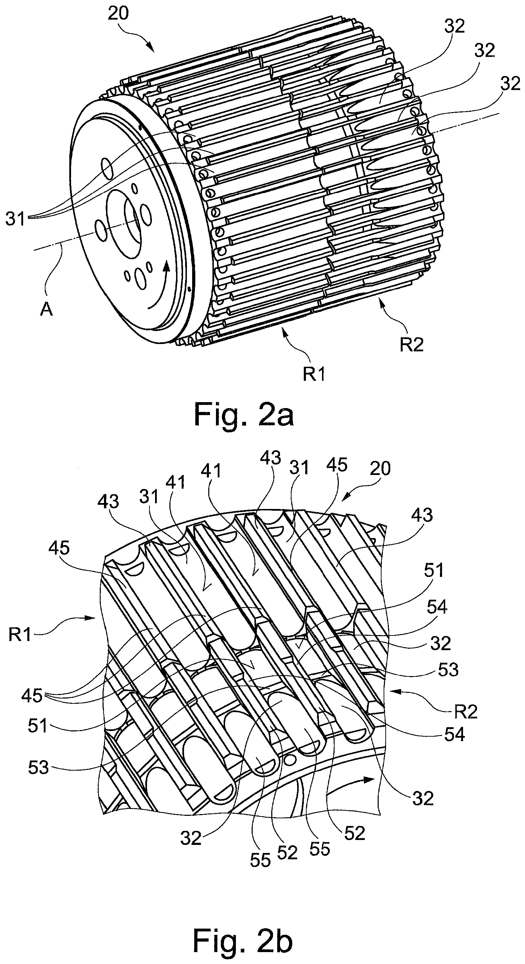

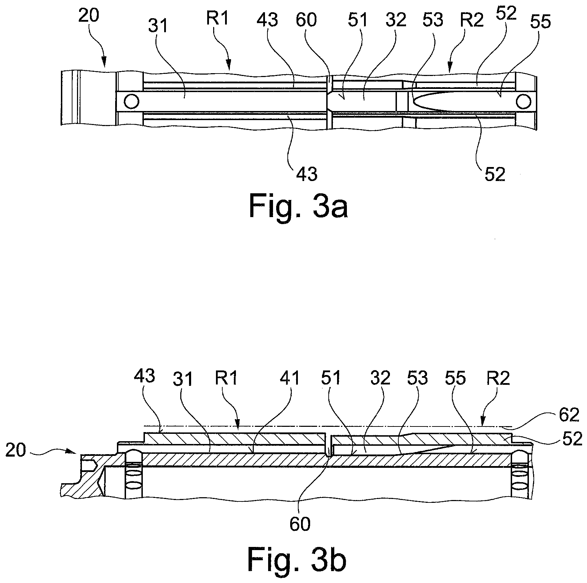

In Fig. 2a ist in einer perspektivischen Darstellung schematisch eine erfindungsgemäße Schiebetrommel 20 dargestellt. Die Schiebetrommel 20 verfügt hierbei über zwei nebeneinander angeordnete Reihen R1, R2, mit Aufnahmemulden 31 und 32. In den Fig. 2b sowie 3a und 3b sind weitere Ansichten der Aufnahmemulden 31 und der Aufnahmemulden 32 der zweiten Reihe R2 dargestellt.

Die Schiebetrommel 20 weist eine Rotationsachse A auf, um die die Reihe R1 mit den Aufnahmemulden 31 und die benachbarte Reihe R2 mit den Aufnahmemulden 32 rotiert werden.

Die Aufnahmemulden 31 der ersten Reihe R1 weisen jeweils einen Muldengrund 41 auf, der jeweils durch Muldenstege 43 begrenzt ist. Hierbei sind die Muldenstege 43 im oberen Bereich mit einer Fase 45 bzw. Abschrägung versehen. Der Muldengrund 41 der Aufnahmemulden 31 der ersten Reihe R1, auf den die stabförmigen Artikel abgelegt werden, weist in axialer Richtung keine Diskontinuität auf, so dass der radiale Abstand des Muldengrunds 41 der Aufnahmemulden 31 zur Rotationsachse A in Längserstreckung der Aufnahmemulden 31 konstant ist.

Die Aufnahmemulden 32 der zweiten Reihe R2 weisen hierbei Muldenstege 52 auf, die ebenfalls mit einer Fase 54 versehen sind. In axialer Richtung sind hierbei die Muldenstege 52 mit einem Versatz zur Mitte der Schiebetrommel 20 ausgebildet.

Die Aufnahmemulden 32 der zweiten Reihe R2 weisen im Bereich, der an die Aufnahmemulden 31 der ersten Reihe R1 angrenzt, einen ersten Muldengrund 51 auf, der, bezogen auf die radiale Richtung gegenüber dem Muldengrund 41 der Aufnahmemulden 31 der ersten Reihe R1, nach innen zurückversetzt ist. Das heißt, dass der radiale Abstand des Muldengrunds 51 der Aufnahmemulden 32 der zweiten Reihe R2 zur Rotationsachse A der Schiebetrommel 20 kleiner ist als der radiale Abstand des Muldengrunds 41 der Aufnahmemulden 31 der ersten Reihe R1.

Dadurch, dass der Muldengrund 51 der Aufnahmemulden 32 der zweiten Reihe R2 einen kleineren radialen Radius zur Rotationsachse der Schiebetrommel 20 gegenüber dem radialen Abstand des Muldengrunds 41 der angrenzenden Aufnahmemulden 31 der ersten Reihe R1 aufweist, wird zwischen der Aufnahmemulde 32 der ersten Reihe R1 und den Aufnahmemulden 31 der ersten Reihe R1 eine mechanische Barriere im Bereich der aneinandergrenzenden Muldengründe 41, 51 ausgebildet (vgl. Fig. 3b).

Wird beispielsweise ein stabförmiger Artikel im Bereich des radial zurückversetzten Muldengrunds 51 der zweiten Reihe angeordnet und während der Rotation der Schiebetrommel 20 nach außen verschoben, so wird der stabförmige Artikel über einen rampenartigen Bereich 53 nach außen geschoben, wobei durch den rampenförmigen Bereich 53 der radiale Abstand des Muldengrunds 51 der Aufnahmemulden 32 der zweiten Reihe R2 vergrößert wird, bis der stabförmige Artikel in einem Muldenbereich 55 im äußeren Bereich der Aufnahmemulden 32 gelangt. Hierbei weist der Muldengrund 51 im äußeren Bereich 55 der Aufnahmemulden 51 der zweiten Reihe R2 den gleichen radialen Abstand auf wie der Muldengrund 41 der Aufnahmemulden 31 der ersten Reihe R1.

Wie aus Fig. 3b ersichtlich, ist zwischen den den jeweiligen Muldengrund 41 begrenzenden Muldenstegen 43 der Aufnahmemulden 31 der ersten Reihe R1 und den den jeweiligen Muldengrund 51 begrenzenden Muldenstegen 52 der Aufnahmemulden 32 der zweiten Reihe R2 ein umlaufender Spalt 60 ausgebildet, so dass die Aufnahmemulden 31 der ersten Reihe R1 und die Aufnahmemulden 32 der zweiten Reihe R2 voneinander beabstandet sind.

In Fig. 3b ist ferner schematisch durch eine gestrichelte Linie eine Abdeckung 62 angedeutet, die in einem Transferbereich zwischen der Aufnahme von stabförmigen Artikeln und der Abgabe der stabförmigen Artikel von der Schiebetrommel 20 angeordnet ist, so dass während der queraxialen Förderung der stabförmigen Artikel auf der Schiebetrommel 20 beim Verschiebevorgang der stabförmigen Artikel in längsaxialer Richtung in den Aufnahmemulden 31 und 32 nach außen die stabförmigen Artikel, die verschoben werden, abgedeckt sind und dadurch in längsaxialer Richtung verschoben werden können.

In einer (hier nicht dargestellten) Ausgestaltung ist vorgesehen, dass die Abdeckung 62 an der der Schiebentrommel 20 zugewandten Innenseite wenigstens einen nach innen ragenden Stoppkörper für die in den Aufnahmemulden 31 der ersten Reihe R1 längsaxial verschiebbaren stabförmigen Artikel auf und/oder einen nach innen ragenden Stoppkörper für die in den Aufnahmemulden 32 der zweiten Reihe R2 längsaxial verschiebbaren stabförmigen Artikel aufweist. Dadurch wird gewährleistet, dass die in den Aufnahmemulden 31, 32 angeordneten Artikel beim längsaxialen Verschiebevorgang in den Aufnahmemulden 31, 32 verbleiben.

Gemäß einer anderen (ebenfalls nicht dargestellten) Ausgestaltung sind eine Abdeckung für die Aufnahmemulden 31 der ersten Reihe R1 und eine Abdeckung für die Aufnahmemulden 32 der zweiten Reihe R2 vorgesehen, wobei die Abdeckung für die Aufnahmemulden 31 der ersten Reihe R1 gegenüber der Abdeckung für die Aufnahmemulden 32 der zweiten Reihe R2 im Bereich der Enden der Aufnahmemulden 31 der ersten Reihe R1 und der Enden der Aufnahmemulden 32 der zweiten Reihe R2, die einander gegenüber angeordnet sind, in radialer Richtung versetzt zueinander angeordnet sind.

Mittels der erfindungsgemäßen Schiebetrommel 20 ist es dabei möglich, kurze stabförmige Artikel bzw. Artikelsegmente mit einer axialen Länge von zum Beispiel 10 mm auf der Schiebetrommel 20 in den Aufnahmemulden 31 und 32 zu verschieben.

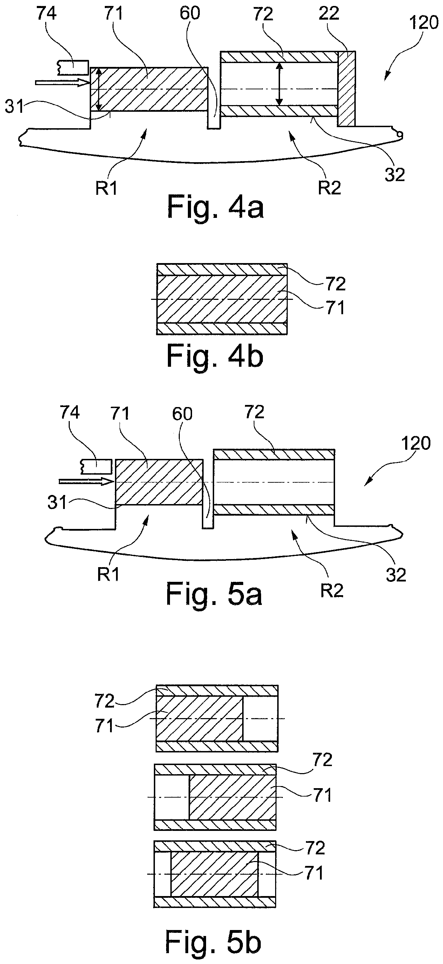

In den Fig. 4a, 5a, 6a und 7a sind weitere Ausführungsformen einer erfindungsgemäßen Schiebetrommel 120 gezeigt, wobei auf der Schiebetrommel 120 während der queraxialen Förderung von stabförmigen Artikeln oder Artikelsegmenten die stabförmigen Artikel bzw. Artikelsegmente gegeneinander längsaxial in den Aufnahmemulden 31 und 32 verschoben werden, wodurch auf der Schiebetrommel 120 die auf der Schiebetrommel 120 geförderten stabförmigen Artikel oder Artikelsegmente ineinandergeschoben werden, so dass hierbei ein Zwischenprodukt auf der Schiebetrommel 120 entsteht.

In den Fig. 4b, 5b, 6b und 7b sind jeweils die auf der Schiebetrommel 120 entstandenen oder hergestellten Zwischenprodukte im Querschnitt dargestellt.

Bei der in Fig. 4a im Querschnitt und im Ausschnitt gezeigten Schiebetrommel 120 ist hierbei in den Aufnahmemulden 31 der ersten Reihe R1 ein zylinderförmiges Artikelsegment 71 angeordnet, während in den benachbarten Aufnahmemulden 32 der zweiten Reihe R2 ein hohlzylindrisches Artikelsegment 72 angeordnet ist.

Das Artikelsegment 71 ist hierbei in der Aufnahmemulde 31 angeordnet, wobei der radiale Abstand des Muldengrunds der Aufnahmemulde 31 der ersten Reihe R1 zur Rotationsachse der Schiebetrommel 120 größer ist als der radiale Abstand des Muldengrunds der Aufnahmemulde 32 der zweiten Reihe R2. Die radialen Abstände des Muldengrunds der Aufnahmemulde 31 der ersten Reihe R1 und des Muldengrunds der Aufnahmemulde 32 der zweiten Reihe R2 sind derart angepasst, dass die Mittenlängsachsen des Artikelsegments 71 und des Artikelsegments 72 auf demselben Teilkreisdurchmesser liegen. Die Artikelsegmente 71, 72 sind in den Aufnahmemulden 31, 32 derart zueinander ausgerichtet, dass die Mittenlängsachsen der beiden Artikelsegmente 71, 72 kollinear zueinander sind. Um das Artikelsegment 71 in den zylindrischen Hohlraum des Artikelsegments 72 einzuschieben, ist am vom Artikelsegment 72 abgewandten Ende des Artikelsegments 71 ein schematisch eingezeichneter Stößel 74 vorgesehen, so dass durch Bewegung des axial bewegbaren Stößels 74 in längsaxialer Richtung das zylinderförmige Artikelsegment 71 in den Hohlraum des Artikelsegments 72 eingeschoben wird.

Vorzugsweise wird der Stößel 74 mittels einer entsprechenden (nicht dargestellten) Kurvensteuerung geführt, wodurch der Stößel 74 entsprechende Hubbewegungen in längsaxialer Richtung ausführt.

Während der Einführung des Artikelsegments 71 in das Artikelsegment 72 liegt das Artikelsegment 72 an dem vom Artikelsegment 71 abgewandten Ende an einem Anschlag 22 an. Hierdurch wird das Artikelsegment 72 in axialer Richtung fixiert.

In Fig. 4b ist das Zwischenprodukt dargestellt, das durch den in Fig. 4a dargestellten Prozess hergestellt wird. Hierbei ist das Artikelsegment 71 bündig mit dem äußeren Artikelsegment 72 positioniert.

In Fig. 5a ist im Vergleich zu dem Ausführungsbeispiel in Fig. 4a das Artikelsegment 71 in der Aufnahmemulde 31 in der Länge kürzer als das Artikelsegment 72 in der Aufnahmemulde 32.

In Fig. 5b sind drei Varianten gezeigt, auf welche Weise das zylinderförmige Artikelsegment 71 in dem hohlzylindrischen Artikelsegment 72 angeordnet werden kann. Die obere Darstellung zeigt eine linksbündige Ausrichtung des Artikelsegments 71 im Artikelsegment 72, während die mittlere Darstellung eine rechtsbündige Anordnung der Artikelsegmente 71, 72 zeigt. Bei dem unteren Ausführungsbeispiel ist das kürzere Artikelsegment 71 mittig im zylinderförmigen Artikelsegment 72 angeordnet.

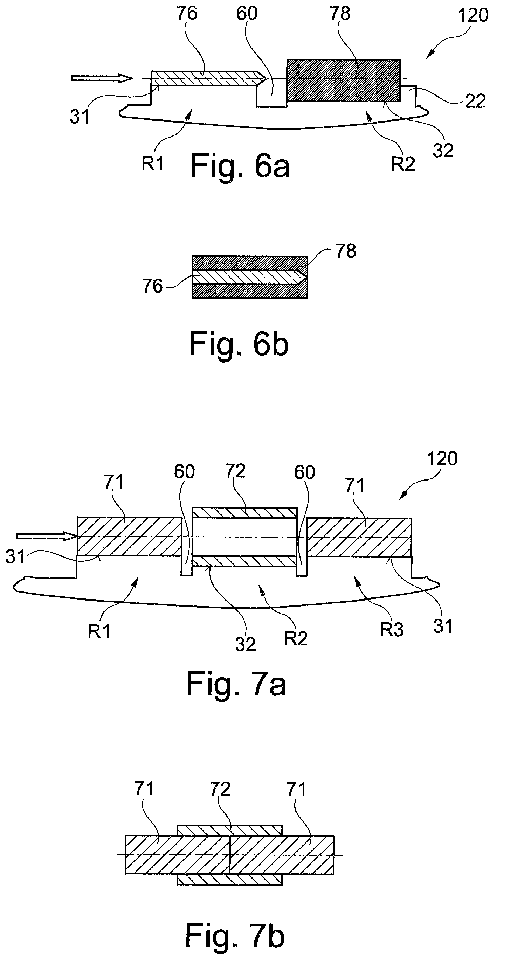

Bei dem in Fig. 6a dargestellten Ausführungsbeispiel ist in der Aufnahmemulde 31 der Reihe R1 ein axialsteifes Artikelsegment 76 angeordnet, das in ein weicheres zylinderförmiges Artikelsegment 78, das in der Aufnahmemulde 32 der Reihe R2 angeordnet ist, eingebracht wird. Hierbei wird das Artikelsegment 76 durch längsaxiales Verschieben in Richtung des Artikelsegments 78 verschoben, wobei durch Einbringen des Artikelsegments 76 in das Artikelsegment 78 das Material im Inneren des Artikelsegments 78 durch das eingebrachte Artikelsegment 76 verdrängt wird. Um das Artikelsegment 76 leichter in das Artikelsegment 78 einzubringen, ist bei dem Artikelsegment 76 an der dem Artikelsegment 78 zugewandten Seite eine Spitze vorgesehen. Das fertige Zwischenprodukt ist in Fig. 4b schematisch dargestellt.

In Fig. 7a ist ein weiteres Ausführungsbeispiel der Schiebetrommel 130 dargestellt, wobei auf beiden Seiten der Aufnahmemulde 32 der Reihe R2 Aufnahmemulden 31 der Reihen R1, R3 vorgesehen sind. Hierbei ist der radiale Abstand des Muldengrunds der Aufnahmemulden 31 der Reihen R1, R3 in Bezug auf die Rotationsachse der Schiebetrommel 120 größer als der radiale Abstand des Muldengrunds der Aufnahmemulden 32 der Reihe R2. Hierbei wird von beiden Seiten in das mittig angeordnete Artikelsegment 72 jeweils ein Artikelsegment 71 in den Hohlraum des Artikelsegments 72 teilweise eingebracht.

In Fig. 7b ist das Zwischenprodukt, das auf der Schiebetrommel 120 gemäß Ausführungsbeispiel 7a hergestellt wird, im Querschnitt gezeigt.

### Bezugszeichenliste

- 10: Filterzuführeinrichtung
- 12: Magazin
- 14: Entnahmetrommel
- 16.1, 16.2, 16.3: Schneidmesser
- 18: Staffeltrommel
- 20: Schiebetrommel
- 22: Positionsanschlag
- 24: Schiebetrommel
- 26: Anschlag
- 28: Anschlag
- 30: Schiebetrommel
- 31: Aufnahmemulde
- 32: Aufnahmemulde
- 41: Muldengrund
- 43: Muldensteg
- 45: Fase
- 51: erster Muldengrund
- 52: Muldensteg
- 53: rampenförmiger Bereich
- 54: Fase
- 55: zweiter Muldengrund
- 60: Spalt
- 62: Abdeckung
- 71: Artikelsegment
- 72: Artikelsegment
- 74: Stößel
- 76: Artikelsegment
- 78: Artikelsegment
- 100: Filterstab
- 111 bis 118: Filterstopfen
- 120: Schiebetrommel
- A: Rotationsachse
- M: Multifiltermaschine
- R1: Reihe
- R2: Reihe
- R3: Reihe

## Patentansprüche

1. Schiebetrommel (20) der Tabak verarbeitenden Industrie mit Aufnahmemulden (31, 32) für stabförmige Artikel der Tabak verarbeitenden Industrie, insbesondere Filterstäbe und/oder Filterstücke und/oder segmentierte Produkte, wobei die Schiebetrommel (20, 120) um eine Rotationsachse (A) rotierbar ist, wobei die Schiebetrommel (20, 120) zwei nebeneinander angeordnete Reihen (R1, R2) von in Umfangsrichtung queraxial hintereinander angeordneten Aufnahmemulden (31, 32) aufweist, wobei die Schiebetrommel (20, 120) eingerichtet ist, dass während der oder bei Förderung der stabförmigen Artikel in queraxialer Richtung die stabförmigen Artikel in den Aufnahmemulden (31; 32) einer Reihe (R1, R2) oder in den Aufnahmemulden (31, 32) beider Reihen (R1, R2) längsaxial verschiebbar sind oder verschoben werden, wobei die Aufnahmemulden (31, 32) beider Reihen (R1, R2) jeweils einen Muldengrund (41, 51) aufweisen, wobei wenigstens im Bereich der Enden der Aufnahmemulden (31) der ersten Reihe (R1) und der Enden der Aufnahmemulden (32) der zweiten Reihe (R2), die einander gegenüber angeordnet sind, der radiale Abstand des Muldengrunds (41) der Aufnahmemulden (31) der ersten Reihe (R1) zur Rotationsachse (A) und der radiale Abstand des Muldengrunds (51) der Aufnahmemulden (32) der zweiten Reihe (R2) zur Rotationsachse (A) verschieden sind, wobei die Aufnahmemulden (31) der ersten Reihe (R1), deren radialer Abstand des Muldengrunds der Aufnahmemulden zur Rotationsachse (A) der Schiebetrommel (20, 120) größer als der radiale Abstand des Muldengrunds (51) der Aufnahmemulden (31) der zweiten Reihe (R2) zur Rotationsachse (A) der Schiebetrommel (20, 120) ist, jeweils als seitliche Begrenzungen für die Aufnahmemulden (32) der zweiten Reihe (R2) wenigstens im Bereich der Enden der Aufnahmemulden (31) der ersten Reihe (R1) und der Enden der Aufnahmemulden (32) der zweiten Reihe (R2), die einander gegenüber angeordnet sind, ausgebildet sind.

2. Schiebetrommel (20, 120) nach Anspruch 1, **dadurch gekennzeichnet, dass** die Aufnahmemulden (31) der ersten Reihe (R1) und die Aufnahmemulden (32) der zweiten Reihe (R2) in einem vorbestimmten Abstand in axialer Richtung voneinander beabstandet sind, wobei insbesondere zwischen den Aufnahmemulden (31) der ersten Reihe (R1) und den Aufnahmemulden (32) der zweiten Reihe (R2) ein in Umfangsrichtung der Schiebetrommel (20, 120) umlaufender Spalt (60) vorgesehen ist
und/oder dass der radiale Abstand des Muldengrunds (41) der Aufnahmemulden (31) der ersten Reihe (R1) zur Rotationsachse (A) der Schiebetrommel (20, 120) entlang der Längserstreckung der Aufnahmemulden (31) der ersten Reihe (R1) konstant ist.

3. Schiebetrommel (20, 120) nach Anspruch 1 oder 2, **dadurch gekennzeichnet, dass** der radiale Abstand des Muldengrunds (51) der Aufnahmemulden (31) der zweiten Reihe (R2) zur Rotationsachse (A) der Schiebetrommel (20, 120) entlang der Längserstreckung der Aufnahmemulden (32) zwischen den Enden der Aufnahmemulden (32) der zweiten Reihe (R2), die den Enden der Aufnahmemulden (31) der ersten Reihe (R1) zugewandt sind, und den Enden der Aufnahmemulden (32) der zweiten Reihe (R2), die den Enden der Aufnahmemulden (31) der ersten Reihe (R1) abgewandt sind, nicht konstant ist und/oder variiert, wobei insbesondere sich der radiale Abstand des Muldengrunds (51) der Aufnahmemulden (31) der zweiten Reihe (R2) zur Rotationsachse (A) der Schiebetrommel (20, 120) in einem Bereich zwischen den Enden der Aufnahmemulden (32) der zweiten Reihe (R2), die den Enden der Aufnahmemulden (31) der ersten Reihe (R1) zugewandt sind, und den Enden der Aufnahmemulden (32) der zweiten Reihe (R2), die den Enden der Aufnahmemulden (31) der ersten Reihe (R1) abgewandt sind, entlang der Längserstreckung der Aufnahmemulden (32), vorzugsweise linear, vergrößert.

4. Schiebetrommel (20, 120) nach einem der Ansprüche 1 bis 3, **dadurch gekennzeichnet, dass** der Muldengrund (51) der Aufnahmemulden (32) der zweiten Reihe (R2), deren radialer Abstand des Muldengrunds der Aufnahmemulden zur Rotationsachse (A) der Schiebetrommel (20, 120) kleiner ist als der radiale Abstand des Muldengrunds (41) der Aufnahmemulden (31) der ersten Reihe (R1) zur Rotationsachse (A) der Schiebetrommel (20, 120) wenigstens im Bereich der Enden der Aufnahmemulden (31) der ersten Reihe (R1) und der Enden der Aufnahmemulden (32) der zweiten Reihe (R2), die einander gegenüber angeordnet sind, im Bereich der Enden, die von den Aufnahmemulden (31) der ersten Reihe (R1) abgewandt sind, einen radialen Abstand zur Rotationsachse der Schiebetrommel (20, 120) aufweisen, der dem radialen Abstand des Muldengrunds der ersten Aufnahmemulden (31) der ersten Reihe (R1) entspricht.

5. Schiebetrommel (20, 120) nach einem der Ansprüche 1 bis 4, **dadurch gekennzeichnet, dass** die Aufnahmemulden (31) der ersten Reihe (R1) und die Aufnahmemulden (32) der zweiten Reihe (R2) jeweils Muldenstege aufweisen, wobei die Enden der Muldenstege der Aufnahmemulden (31) der ersten Reihe (R1) den Enden der Muldenstege der Aufnahmemulden (32) der zweiten Reihe (R2) einander gegenüberliegend angeordnet sind, wobei die Muldenstege der Aufnahmemulden (31) der ersten Reihe (R1) fluchtend zu den Muldenstegen der Aufnahmemulden (32) der zweiten Reihe (R2) angeordnet oder ausgerichtet sind.

6. Schiebetrommel (20, 120) nach Anspruch 5, **dadurch gekennzeichnet, dass** die Muldenstege der Aufnahmemulden (31) der ersten Reihe (R1) und die Muldenstege der Aufnahmemulden (32) der zweiten Reihe (R2) im Bereich der Enden der Aufnahmemulden (31) der ersten Reihe (R1) und der Enden der Aufnahmemulden (32) der zweiten Reihe (R2), die einander gegenüber angeordnet sind, in Bezug auf die Rotationsachse (A) der Schiebetrommel (20, 120) unterschiedlich hoch sind
und/oder dass die Muldenstege der Aufnahmemulden (32) der zweiten Reihe (R2), deren radialer Abstand des Muldengrunds der Aufnahmemulden zur Rotationsachse (A) der Schiebetrommel (20, 120) kleiner ist als der radiale Abstand des Muldengrunds (41) der Aufnahmemulden (31) der ersten Reihe (R1) zur Rotationsachse (A) der Schiebetrommel (20, 120) im Bereich der Enden der Aufnahmemulden (31) der ersten Reihe (R1) und der Enden der Aufnahmemulden (32) der zweiten Reihe (R2), die einander gegenüber angeordnet sind, im Bereich der Enden der Aufnahmemulden (32) der zweiten Reihe (R2), die von den Aufnahmemulden (31) der ersten Reihe (R1) abgewandt sind, in Bezug auf die Rotationsachse (A) der Schiebetrommel (20, 120) die gleiche Höhe aufweisen wie die Muldenstege der Aufnahmemulden (31) der ersten Reihe (R1).

7. Schiebetrommel (20, 120) nach einem der Ansprüche 1 bis 6, **dadurch gekennzeichnet, dass** an den Enden der Aufnahmemulden (31) der ersten Reihe (R1), die von den Aufnahmemulden (32) der zweiten Reihe (R2) abgewandt sind, jeweils seitliche Anschläge für die in den Aufnahmemulden (31) der ersten Reihe (R1) angeordneten oder anordbaren stabförmigen Artikel vorgesehen sind und/oder dass an den Enden der Aufnahmemulden (32) der zweiten Reihe (R2), die von den Aufnahmemulden (31) der ersten Reihe (R1) abgewandt sind, jeweils seitliche Anschläge für die in den Aufnahmemulden (32) der zweiten Reihe (R2) angeordneten oder anordbaren stabförmigen Artikel vorgesehen sind
und/oder dass in den jeweiligen Bereichen der Aufnahmemulden (31) der ersten Reihe (R1), die von den Aufnahmemulden (32) der zweiten Reihe (R2) abgewandt sind, jeweils in Längsrichtung der Aufnahmemulden (31) der ersten Reihe (R1) Bewegungsorgane für die in den Aufnahmemulden (31) der ersten Reihe (R1) angeordneten oder anordbaren stabförmigen Artikel vorgesehen sind, so dass die in den Aufnahmemulden (31) der ersten Reihe (R1) angeordneten oder anordbaren stabförmigen Artikel in längsaxialer Richtung bewegt werden oder bewegbar sind
und/oder dass in den jeweiligen Bereichen der Aufnahmemulden (32) der zweiten Reihe (R2), die von den Aufnahmemulden (31) der ersten Reihe (R1) abgewandt sind, jeweils in Längsrichtung der Aufnahmemulden (32) der zweiten Reihe (R2) Bewegungsorgane für die in den Aufnahmemulden (32) der zweiten Reihe (R2) angeordneten oder anordbaren stabförmigen Artikel vorgesehen sind, so dass die in den Aufnahmemulden (32) der zweiten Reihe (R2) angeordneten oder anordbaren stabförmigen Artikel in längsaxialer Richtung bewegt werden oder bewegbar sind.

8. Schiebetrommel (20, 120) nach einem der Ansprüche 1 bis 7, **dadurch gekennzeichnet, dass** a.) in den jeweiligen Bereichen der Aufnahmemulden (31) der ersten Reihe (R1), die von den Aufnahmemulden (32) der zweiten Reihe (R2) abgewandt sind, jeweils in Längsrichtung der Aufnahmemulden (31) der ersten Reihe (R1) Bewegungsorgane für die in den Aufnahmemulden (31) der ersten Reihe (R1) angeordneten oder anordbaren stabförmigen Artikel vorgesehen sind, so dass die in den Aufnahmemulden (31) der ersten Reihe (R1) angeordneten oder anordbaren stabförmigen Artikel in längsaxialer Richtung bewegt werden oder bewegbar sind, und an den Enden der Aufnahmemulden (32) der zweiten Reihe (R2), die von den Aufnahmemulden (31) der ersten Reihe (R1) abgewandt sind, jeweils seitliche Anschläge für die in den Aufnahmemulden (32) der zweiten Reihe (R2) angeordneten oder anordbaren stabförmigen Artikel vorgesehen sind
und/oder dass b.) in den jeweiligen Bereichen der Aufnahmemulden (32) der zweiten Reihe (R2), die von den Aufnahmemulden (31) der ersten Reihe (R1) abgewandt sind, jeweils in Längsrichtung der Aufnahmemulden (32) der zweiten Reihe (R2) Bewegungsorgane für die in den Aufnahmemulden (32) der zweiten Reihe (R2) angeordneten oder anordbaren stabförmigen Artikel vorgesehen sind, so dass die in den Aufnahmemulden (32) der zweiten Reihe (R2) angeordneten oder anordbaren stabförmigen Artikel in längsaxialer Richtung bewegt werden oder bewegbar sind, und an den Enden der Aufnahmemulden (31) der ersten Reihe (R1), die von den Aufnahmemulden (32) der zweiten Reihe (R2) abgewandt sind, jeweils seitliche Anschläge für die in den Aufnahmemulden (31) der ersten Reihe (R1) angeordneten oder anordbaren stabförmigen Artikel vorgesehen sind.

9. Schiebetrommel (20, 120) nach einem der Ansprüche 1 bis 8, **dadurch gekennzeichnet, dass** die Aufnahmemulden (31) der ersten Reihe (R1) jeweils eine Muldenkontur mit einer Fase (45), insbesondere eine bezogen auf die Förderrichtung der Schiebetrommel (20, 120) dem Muldengrund vorauseilende Fase (45), aufweisen und/oder dass die Aufnahmemulden (32) der zweiten Reihe (R2) jeweils eine Muldenkontur mit einer Fase (54), insbesondere eine bezogen auf die Förderrichtung der Schiebetrommel (20, 120) dem Muldengrund vorauseilende Fase (54), aufweisen.

10. Schiebetrommel (20, 120) nach einem der Ansprüche 1 bis 9, **dadurch gekennzeichnet, dass** zwischen einem Aufnahmebereich zum Aufnehmen von stabförmigen Artikeln in die Aufnahmemulden (31) der ersten Reihe (R1) und in die Aufnahmemulden (32) der zweiten Reihe (R2) von einer in Förderrichtung stromaufwärts vorgesehenen Schiebetrommel (20, 120), insbesondere Staffeltrommel, und einem Übergabebereich zum Übergeben der auf der Schiebetrommel (20, 120) längsaxial verschobenen stabförmigen Artikel aus den Aufnahmemulden an eine nachfolgende Schiebetrommel (20, 120), insbesondere eine zweite Schiebetrommel, mindestens eine Abdeckvorrichtung (62) vorgesehen ist, wobei insbesondere die Abdeckvorrichtung eine Abdeckung für die Aufnahmemulden (31) der ersten Reihe (R1) und eine Abdeckung für die Aufnahmemulden (32) der zweiten Reihe (R2) aufweist.

11. Schiebetrommel (20, 120) nach Anspruch 10, **dadurch gekennzeichnet, dass** die Abdeckvorrichtung (62), vorzugsweise an der den Aufnahmemulden (31, 32) der ersten Reihe (R1) und/oder der zweiten Reihe (R2) zugewandten Innenseite, wenigstens einen Stoppkörper für die in den Aufnahmemulden (31) der ersten Reihe (R1) längsaxial verschiebbaren oder verschobenen stabförmigen Artikel und/oder einen Stoppkörper für die in den Aufnahmemulden (32) der zweiten Reihe (R2) längsaxial verschiebbaren oder verschobenen stabförmigen Artikel aufweist,
und/oder dass eine Abdeckung für die Aufnahmemulden (31) der ersten Reihe (R1) gegenüber einer Abdeckung für die Aufnahmemulden (32) der zweiten Reihe (R2) im Bereich der Enden der Aufnahmemulden (31) der ersten Reihe (R1) und der Enden der Aufnahmemulden (32) der zweiten Reihe (R2), die einander gegenüber angeordnet sind, in radialer Richtung versetzt zueinander angeordnet sind.

12. Verwendung einer Schiebetrommel (20, 120) der Tabak verarbeitenden Industrie mit Aufnahmemulden für stabförmige Artikel der Tabak verarbeitenden Industrie, nach einem der Ansprüche 1 bis 11 in einer Trommelanordnung zum queraxialen Fördern von stabförmigen Artikeln der Tabak verarbeitenden Industrie, insbesondere Filterstäbe und/oder Filterstücke und/oder segmentierte Produkte.

13. Verwendung nach Anspruch 12, **dadurch gekennzeichnet, dass** die Schiebetrommel (20, 120) als erste Schiebetrommel der Trommelanordnung ausgebildet ist und die Trommelanordnung eine zweite Schiebetrommel zum längsaxialen Verschieben der stabförmigen Artikel in Aufnahmemulden aufweist, wobei die stabförmigen Artikel nach längsaxialem Verschieben auf der ersten Schiebetrommel nachfolgend von der ersten Schiebetrommel an die zweite Schiebetrommel übergeben werden oder übergebbar sind und die übergebenen stabförmigen Artikel auf der zweiten Schiebetrommel in den Aufnahmemulden der zweiten Schiebetrommel in längsaxialer Richtung verschiebbar sind oder verschoben werden, wobei insbesondere die zweite Schiebetrommel durchgehende Aufnahmemulden für die stabförmigen Artikel aufweist, wobei insbesondere zwischen den äußeren Randbereichen der Aufnahmemulden der zweiten Schiebetrommel wenigstens ein Anschlag, vorzugsweise zwei Anschläge, für die stabförmigen Artikel vorgesehen ist.

14. Maschine der Tabak verarbeitenden Industrie, insbesondere Filteransetzmaschine oder Filterherstellungsmaschine, mit einer Schiebetrommel (20, 120) nach einem der Ansprüche 1 bis 11, vorzugsweise für eine Filterzuführeinrichtung.

15. Verfahren zum queraxialen Fördern von stabförmigen Artikeln der Tabak verarbeitenden Industrie, insbesondere Filterstäbe und/oder aus Filterstäben geschnittene Filterstücke und/oder segmentierte Produkte, unter Verwendung einer Schiebetrommel (20, 120) nach einem der Ansprüche 1 bis 11.

## Claims

1. A shifting drum (20) for the tobacco processing industry with receiving troughs (31, 32) for rod-shaped articles for the tobacco processing industry, in particular filter rods and/or filter pieces and/or segmented products, wherein the shifting drum (20, 120) can be rotated about an axis of rotation (A), wherein the shifting drum (20, 120) has two rows (R1, R2) arranged next to each other of receiving troughs (31, 32) arranged one behind the other along the transverse axis in the circumferential direction, wherein the shifting drum (20, 120) is configured so that the rod-shaped articles can be shifted or are shifted along the longitudinal axis in the receiving troughs (31; 32) of one row (R1, R2) or in the receiving troughs (31, 32) of both rows (R1, R2) during or upon transporting the rod-shaped articles in the transverse axial direction, wherein the receiving troughs (31, 32) of both rows (R1, R2) each have a groove bottom (41, 51), wherein at least in the region of the ends of the receiving troughs (31) of the first row (R1) and the ends of the receiving troughs (32) of the second row (R2) which are arranged opposite each other, the radial distance of the groove bottom (41) of the receiving troughs (31) of the first row (R1) from the axis of rotation (A) and the radial distance of the groove bottom (51) of the receiving troughs (32) of the second row (R2) from the axis of rotation (A) are different, wherein the receiving troughs (31) of the first row (R1), of which the radial distance of the groove bottom of the receiving troughs from the axis of rotation (A) of the shifting drum (20, 120) is greater than the radial distance of the groove bottom (51) of the receiving troughs (31) of the second row (R2) from the axis of rotation (A) of the shifting drum (20, 120), are each designed as lateral limiters for the receiving troughs (32) of the second row (R2) at least in the region of the ends of the receiving troughs (31) of the first row (R1) and the ends of the receiving troughs (32) of the second row (R2) which are arranged opposite each other.

2. The shifting drum (20, 120) according to claim 1, **characterized in that** the receiving troughs (31) of the first row (R1) and the receiving troughs (32) of the second row (R2) are spaced apart from each other in the axial direction at a predetermined distance, wherein a circumferential gap (60) is provided in the circumferential direction in particular between the receiving troughs (31) of the first row (R1) and the receiving troughs (32) of the second row (R2)
and/or that the radial distance of the groove bottom (41) of the receiving troughs (31) of the first row (R1) from the axis of rotation (A) of the shifting drum (20, 120) is constant along the longitudinal extension of the receiving troughs (31) of the first row (R1).

3. The shifting drum (20, 120) according to claim 1 or 2, **characterized in that** the radial distance of the groove bottom (51) of the receiving troughs (31) of the second row (R2) from the axis of rotation (A) of the shifting drum (20, 120) is not constant and/or varies along the longitudinal extension of the receiving troughs (32) between the ends of the receiving troughs (32) of the second row (R2) which face the ends of the receiving troughs (31) of the first row (R1) and the ends of the receiving troughs (32) of the second row (R2) which face away from the ends of the receiving troughs (31) of the first row (R1), wherein in particular the radial distance of the groove bottom (51) of the receiving troughs (31) of the second row (R2) from the axis of rotation (A) of the shifting drum (20, 120) increases, preferably linearly, along the longitudinal extension of the receiving troughs (32) in a region between the ends of the receiving troughs (32) of the second row (R2) that face the ends of the receiving troughs (31) of the first row (R1) and the ends of the receiving troughs (32) of the second row (R2) that face away from the ends of the receiving troughs (31) of the first row (R1).

4. The shifting drum (20, 120) according to one of claims 1 to 3, **characterized in that** the groove bottom (51) of the receiving troughs (32) of the second row (R2), of which the radial distance of the groove bottom of the receiving troughs from the axis of rotation (A) of the shifting drum (20, 120) is smaller than the radial distance of the groove bottom (41) of the receiving troughs (31) of the first row (R1) from the axis of rotation (A) of the shifting drum (20, 120) at least in the region of the ends of the receiving troughs (31) of the first row (R1) and the ends of the receiving troughs (32) of the second row (R2) which are arranged opposite each other, have in the region of the ends which face away from the receiving troughs (31) of the first row (R1) a radial distance from the axis of rotation of the shifting drum (20, 120) which corresponds to the radial distance of the groove bottom of the first receiving troughs (31) of the first row (R1).

5. The shifting drum (20, 120) according to one of claims 1 to 4, **characterized in that** the receiving troughs (31) of the first row (R1) and the receiving troughs (32) of the second row (R2) each have aligning groove segments, wherein the ends of the aligning groove segments of the receiving troughs (31) of the first row (R1) are arranged lying opposite the ends of the aligning groove segments of the receiving troughs (32) of the second row (R2), wherein the aligning groove segments of the receiving troughs (31) of the first row (R1) are arranged or oriented in alignment with the aligning groove segments of the receiving troughs (32) of the second row (R2).

6. The shifting drum (20, 120) according to claim 5, **characterized in that** the aligning groove segments of the receiving troughs (31) of the first row (R1) and the aligning groove segments of the receiving troughs (32) of the second row (R2) are of different heights with respect to the axis of rotation (A) of the shifting drum (20, 120) in the region of the ends of the receiving troughs (31) of the first row (R1) and the ends of the receiving troughs (32) of the second row (R2) which are arranged opposite each other
and/or that the aligning groove segments of the receiving troughs (32) of the second row (R2), of which the radial distance of the groove bottom of the receiving troughs from the axis of rotation (A) of the shifting drum (20, 120) is smaller than the radial distance of the groove bottom (41) of the receiving troughs (31) of the first row (R1) from the axis of rotation (A) of the shifting drum (20, 120) in the region of the ends of the receiving troughs (31) of the first row (R1) and the ends of the receiving troughs (32) of the second row (R2) which are arranged opposite each other, have the same height with respect to the axis of rotation (A) of the shifting drum (20, 120) in the region of the ends of the receiving troughs (32) of the second row (R2) which face away from the receiving troughs (31) of the first row (R1) as the aligning groove segments of the receiving troughs (31) of the first row (R1).

7. The shifting drum (20, 120) according to one of claims 1 to 6, **characterized in that** lateral stops for the rod-shaped articles arranged or arrangeable in the receiving troughs (31) of the first row (R1) are provided on each of the ends of the receiving troughs (31) of the first row (R1) that face away from the receiving troughs (32) of the second row (R2) and/or that lateral stops for the rod-shaped articles arranged or arrangeable in the receiving troughs (32) of the second row (R2) are provided on each of the ends of the receiving troughs (32) of the second row (R2) that face away from the receiving troughs (31) of the first row (R1)
and/or that movement members for the rod-shaped articles arranged or arrangeable in the receiving troughs (31) of the first row (R1) are provided, each in the longitudinal direction of the receiving troughs (31) of the first row (R1), in the respective regions of the receiving troughs (31) of the first row (R1) that face away from the receiving troughs (32) of the second row (R2), such that the rod-shaped articles arranged or arrangeable in the receiving troughs (31) of the first row (R1) are moved or can be moved in the longitudinal axial direction
and/or that movement members for the rod-shaped articles arranged or arrangeable in the receiving troughs (32) of the second row (R2) are provided, each in the longitudinal direction of the receiving troughs (32) of the second row (R2), in the respective regions of the receiving troughs (32) of the second row (R2) that face away from the receiving troughs (31) of the first row (R1), such that the rod-shaped articles arranged or arrangeable in the receiving troughs (32) of the second row (R2) are moved or can be moved in the longitudinal axial direction.

8. The shifting drum (20, 120) according to one of claims 1 to 7, **characterized in that** a.) movement members for the rod-shaped articles arranged or arrangeable in the receiving troughs (31) of the first row (R1) are provided, each in the longitudinal direction of the receiving troughs (31) of the first row (R1), in the respective regions of the receiving troughs (31) of the first row (R1) that face away from the receiving troughs (32) of the second row (R2), such that the rod-shaped articles arranged or arrangeable in the receiving troughs (31) of the first row (R1) are moved or can be moved in the longitudinal axial direction, and lateral stops for the rod-shaped articles arranged or arrangeable in the receiving troughs (32) of the second row (R2) are provided on each of the ends of the receiving troughs (32) of the second row (R2) that face away from the receiving troughs (31) of the first row (R1)
and/or that b.) movement members for the rod-shaped articles arranged or arrangeable in the receiving troughs (32) of the second row (R2) are provided, each in the longitudinal direction of the receiving troughs (32) of the second row (R2), in the respective regions of the receiving troughs (32) of the second row (R2) that face away from the receiving troughs (31) of the first row (R1), such that the rod-shaped articles arranged or arrangeable in the receiving troughs (32) of the second row (R2) are moved or can be moved in the longitudinal axial direction, and lateral stops for the rod-shaped articles arranged or arrangeable in the receiving troughs (31) of the first row (R1) are provided on each of the ends of the receiving troughs (31) of the first row (R1) that face away from the receiving troughs (32) of the second row (R2).

9. The shifting drum (20, 120) according to one of claims 1 to 8, **characterized in that** the receiving troughs (31) of the first row (R1) each have a trough contour with a chamfer (45), in particular a chamfer (45) running ahead of the groove bottom relative to the transport direction of the shifting drum (20, 120), and/or that the receiving troughs (32) of the second row (R2) each have a trough contour with a chamfer (54), in particular a chamfer (54) running ahead of the groove bottom relative to the transport direction of the shifting drum (20, 120).

10. The shifting drum (20, 120) according to one of claims 1 to 9, **characterized in that** at least one covering device (62) is provided between a receiving region for receiving rod-shaped articles into the receiving troughs (31) of the first row (R1) and into the receiving troughs (32) of the second row (R2) from a shifting drum (20, 120), in particular grading drum, provided upstream in the transport direction and a transfer region for transferring the rod-shaped articles shifted along the longitudinal axis on the shifting drum (20, 120) from the receiving troughs to a subsequent shifting drum (20, 120), in particular a second shifting drum, wherein in particular the covering device has a cover for the receiving troughs (31) of the first row (R1) and a cover for the receiving troughs (32) of the second row (R2).

11. The shifting drum (20, 120) according to claim 10, **characterized in that** the covering device (62) has, preferably on the inner side facing the receiving troughs (31, 32) of the first row (R1) and/or the second row (R2), at least one stop body for the rod-shaped articles shiftable or shifted along the longitudinal axis in the receiving troughs (31) of the first row (R1) and/or one stop body for the rod-shaped articles shiftable or shifted along the longitudinal axis in the receiving troughs (32) of the second row (R2),
and/or that a cover for the receiving troughs (31) of the first row (R1) in relation to a cover for the receiving troughs (32) of the second row (R2) are arranged offset from each other in the radial direction in the region of the ends of the receiving troughs (31) of the first row (R1) and the ends of the receiving troughs (32) of the second row (R2) which are arranged opposite each other.

12. A use of a shifting drum (20, 120) for the tobacco processing industry with receiving troughs for rod-shaped articles for the tobacco processing industry, according to one of claims 1 to 11 in a drum arrangement for transverse axial transport of rod-shaped articles for the tobacco processing industry, in particular filter rods and/or filter pieces and/or segmented products.

13. The use according to claim 12, **characterized in that** the shifting drum (20, 120) is designed as the first shifting drum of the drum arrangement and the drum arrangement has a second shifting drum for shifting the rod-shaped articles along the longitudinal axis into receiving troughs, wherein the rod-shaped articles are subsequently transferred or can be transferred from the first shifting drum to the second shifting drum after the shifting along the longitudinal axis on the first shifting drum, and the transferred rod-shaped articles can be transferred or are transferred in the longitudinal axial direction on the second shifting drum in the receiving troughs of the second shifting drum, wherein in particular the second shifting drum has continuous receiving troughs for the rod-shaped articles, wherein at least one stop, preferably two stops, for the rod-shaped articles is provided in particular between the outer edge regions of the receiving troughs of the second shifting drum.

14. A machine for the tobacco processing industry, in particular a filter assembly machine or a filter manufacturing machine, with a shifting drum (20, 120) according to one of claims 1 to 11, preferably for a filter feed device.

15. A method for transverse axial transport of rod-shaped articles for the tobacco processing industry, in particular filter rods and/or filter pieces cut from filter rods and/or segmented products, using a shifting drum (20, 120) according to one of claims 1 to 11.

## Revendications

1. Tambour coulissant (20) pour l'industrie de traitement du tabac doté de creux de réception (31, 32) pour articles en forme de bâton de l'industrie de traitement du tabac, en particulier des bâtons de filtre et / ou des morceaux de filtre et / ou des produits segmentés, le tambour coulissant (20, 120) pouvant tourner autour d'un axe de rotation (A), le tambour coulissant (20, 120) comportant deux rangées (R1, R2), disposées l'une auprès de l'autre, de creux de réception (31, 32) disposés les uns derrière les autres axialement transversalement dans une direction circonférentielle, le tambour coulissant (20, 120) étant configuré de sorte que pendant ou par l'avancement des articles en forme de bâton en direction axiale transversale, les articles en forme de bâton dans les creux de réception (31, 32) d'une rangée (R1, R2) ou dans les creux de réception (31, 32) des deux rangées (R1, R2) sont déplacés ou déplaçables axialement longitudinalement, les creux de réception (31, 32) des deux rangées (R1, R2) comportant chacun un fond de creux (41, 51), la distance radiale du fond de creux (41) des creux de réception (31) de la première rangée (R1) par rapport à l'axe de rotation (A) et la distance radiale du fond de creux (51) des creux de réception (32) de la deuxième rangée (R2) par rapport à l'axe de rotation (A) étant différentes au moins dans la zone des extrémités des creux de réception (31) de la première rangée (R1) et des extrémités des creux de réception (32) de la deuxième rangée (R2) disposées les unes en face des autres, les creux de réception (31) de la première rangée (R1), dont la distance radiale du fond de creux des creux de réception par rapport à l'axe de rotation (A) du tambour coulissant (20, 120) est plus grande que la distance radiale du fond de creux (51) du creux de réception (31) de la deuxième rangée (R2) par rapport à l'axe de rotation (A) du tambour coulissant (20, 120), étant respectivement formés en tant que limites latérales pour les creux de réception (32) de la deuxième rangée (R2) qui sont au moins dans la zone des extrémités des creux de réception (31) de la première rangée (R1) et des extrémités des creux de réception (32) de la deuxième rangée (R2), lesquelles sont disposées les unes en face des autres.

2. Tambour coulissant (20, 120) selon la revendication 1, **caractérisé en ce que** les creux de réception (31) de la première rangée (R1) et les creux de réception (32) de la deuxième rangée (R2) sont espacés les uns des autres à une distance prédéterminée en direction axiale, en particulier une fente périphérique (60) dans la direction circonférentielle du tambour coulissant (20, 120) étant prévue entre les creux de réception (31) de la première rangée (R1) et les creux de réception (32) de la deuxième rangée (R2)
et / ou **en ce que** la distance radiale du fond de creux (41) des creux de réception (31) de la première rangée (R1) par rapport à l'axe de rotation (A) du tambour coulissant (20, 120) est constante le long de l'étendue longitudinale des creux de réception (31) de la première rangée (R1).

3. Tambour coulissant (20, 120) selon la revendication 1 ou 2, **caractérisé en ce que** la distance radiale du fond de creux (51) des creux de réception (31) de la deuxième rangée (R2) par rapport à l'axe de rotation (A) du tambour coulissant (20, 120) le long de l'extension longitudinale des creux de réception (32) entre les extrémités des creux de réception (32) de la deuxième rangée (R2) orientées vers les extrémités des creux de réception (31) de la première rangée (R1), et les extrémités des creux de réception (32) de la deuxième rangée (R2) qui sont opposées aux extrémités des creux de réception (31) de la première rangée (R1), n'est pas constante et / ou varie, en particulier la distance radiale du fond de creux (51) des creux de réception (31) de la deuxième rangée (R2) par rapport à l'axe de rotation (A) du tambour coulissant (20, 120) augmente, de préférence linéairement, dans une zone située entre les extrémités des creux de réception (32) de la deuxième rangée (R2) qui sont orientées vers les extrémités des creux de réception (31) de la première rangée (R1) et les extrémités des creux de réception (32) de la deuxième rangée (R2) qui sont opposées aux extrémités des creux de réception (31) de la première rangée (R1), le long de l'étendue longitudinale des creux de réception (32).

4. Tambour coulissant (20, 120) selon l'une des revendications 1 à 3, **caractérisé en ce que** le fond de creux (51) des creux de réception (32) de la deuxième rangée (R2), dont la distance radiale du fond de creux des creux de réception par rapport à l'axe de rotation (A) du tambour coulissant (20, 120) est inférieure à la distance radiale du fond de creux (41) des creux de réception (31) de la première rangée (R1) par rapport à l'axe de rotation (A) du tambour coulissant (20, 120) au moins dans la zone des extrémités des creux de réception (31) de la première rangée (R1) et des extrémités des creux de réception (32) de la deuxième rangée (R2), lesquelles sont disposées les unes en face des autres, comportent une distance radiale par rapport à l'axe de rotation du tambour coulissant (20, 120) dans la zone des extrémités qui sont opposées aux creux de réception (31) de la première rangée (R1), laquelle correspond à la distance radiale du fond de creux du premier creux de réception (31) de la première rangée (R1).

5. Tambour coulissant (20, 120) selon l'une des revendications 1 à 4, **caractérisé en ce que** les creux de réception (31) de la première rangée (R1) et les creux de réception (32) de la deuxième rangée (R2) comportent respectivement des arêtes de creux, les extrémités des arêtes de creux des creux de réception (31) de la première rangée (R1) étant disposées en face des extrémités des arêtes de creux des creux de réception (32) de la deuxième rangée (R2), les arêtes de creux des creux de réception (31) de la première rangée (R1) étant disposées ou orientées alignées avec les arêtes de creux des creux de réception (32) de la deuxième rangée (R2).

6. Tambour coulissant (20, 120) selon la revendication 5, **caractérisé en ce que** les arêtes de creux des creux de réception (31) de la première rangée (R1) et les arêtes de creux des creux de réception (32) de la deuxième rangée (R2) ont des hauteurs différentes par rapport à l'axe de rotation (A) du tambour coulissant (20, 120) dans la zone des extrémités des creux de réception (31) de la première rangée (R1) et des extrémités des creux de réception (32) de la deuxième rangée (R2), lesquelles sont disposées les unes en face des autres et / ou **en ce que** les arêtes de creux des creux de réception (32) de la deuxième rangée (R2), dont la distance radiale du fond de creux des creux de réception par rapport à l'axe de rotation (A) du tambour coulissant (20, 120) est inférieure à la distance radiale du fond de creux (41) des creux de réception (31) de la première rangée (R1) par rapport à l'axe de rotation (A) du tambour coulissant (20, 120) dans la zone des extrémités des creux de réception (31) de la première rangée (R1) et des extrémités des creux de réception (32) de la deuxième rangée (R2), lesquelles sont disposées les unes en face des autres, comportent la même hauteur que celle des arêtes de creux des creux de réception (31) de la première rangée (R1) dans la zone des extrémités des creux de réception (32) de la deuxième rangée (R2) qui sont opposées aux creux de réception (31) de la première rangée (R1) par rapport à l'axe de rotation (A) du tambour coulissant (20, 120).

7. Tambour coulissant (20, 120) selon l'une des revendications 1 à 6, **caractérisé en ce qu'**aux extrémités des creux de réception (31) de la première rangée (R1) qui sont opposées aux creux de réception (32) de la deuxième rangée (R2), des butées latérales sont respectivement prévues pour les articles en forme de bâton qui sont disposés ou peuvent être disposés dans les creux de réception (31) de la première rangée (R1) et / ou **en ce qu'**aux extrémités des creux de réception (32) de la deuxième rangée (R2) qui sont opposées aux creux de réception (31) de la première rangée (R1), des butées latérales sont respectivement prévues pour les articles en forme de bâton qui sont disposés ou peuvent être disposés dans les creux de réception (32) de la deuxième rangée (R2)
et / ou que dans les zones respectives des creux de réception (31) de la première rangée (R1) qui sont opposées aux creux de réception (32) de la deuxième rangée (R2), respectivement en direction longitudinale des creux de réception (31) de la première rangée (R1), des organes de déplacement sont prévus pour les articles en forme de bâton disposés ou pouvant être disposés dans les creux de réception (31) de la première rangée (R1), de sorte que les articles en forme de bâton disposés ou pouvant être disposés dans les creux de réception (31) de la première rangée (R1) sont déplacés ou déplaçables en direction axiale longitudinale
et / ou **en ce que** dans les zones respectives des creux de réception (32) de la deuxième rangée (R2) qui sont opposées aux creux de réception (31) de la première rangée (R1), des organes de déplacement pour les articles en forme de bâton disposés ou pouvant être disposés dans les creux de réception (32) de la deuxième rangée (R2) sont respectivement prévus en direction longitudinale des creux de réception (32) de la deuxième rangée (R2), de sorte que les articles en forme de bâton disposés ou pouvant être disposés dans les creux de réception (32) de la deuxième rangée (R2) sont déplacés ou déplaçables en direction axiale longitudinale.

8. Tambour coulissant (20, 120) selon l'une des revendications 1 à 7, **caractérisé en ce que** a.) dans les zones respectives des creux de réception (31) de la première rangée (R1) qui sont opposées aux creux de réception (32) de la deuxième rangée (R2), respectivement en direction longitudinale des creux de réception (31) de la première rangée (R1), des organes de déplacement sont prévus pour les articles en forme de bâton disposés ou pouvant être disposés dans les creux de réception (31) de la première rangée (R1), de sorte que les articles en forme de bâton disposés ou pouvant être disposés dans les creux de réception (31) de la première rangée (R1) sont déplacés ou déplaçables en direction axiale longitudinale, et aux extrémités des creux de réception (32) de la deuxième rangée (R2) opposées aux creux de réception (31) de la première rangée (R1), des butées latérales sont respectivement prévues pour les articles en forme de bâton disposés ou pouvant être disposés dans les creux de réception (32) de la deuxième rangée (R2)
et/ou **en ce que** b.) dans les zones respectives des creux de réception (32) de la deuxième rangée (R2) qui sont opposées aux creux de réception (31) de la première rangée (R1), des organes de déplacement pour les articles en forme de bâton disposés ou pouvant être disposés dans les creux de réception (32) de la deuxième rangée (R2) sont respectivement prévus en direction longitudinale des creux de réception (32) de la deuxième rangée (R2), de sorte que les articles en forme de bâton disposés ou pouvant être disposés dans les creux de réception (32) de la deuxième rangée (R2) sont déplacés ou déplaçables en direction axiale longitudinale, et aux extrémités des creux de réception (31) de la première rangée (R1) qui sont opposées aux creux de réception (32) de la deuxième rangée (R2), des butées latérales sont respectivement prévues pour les articles en forme de bâton disposés ou pouvant être disposés dans les creux de réception (31) de la première rangée (R1).

9. Tambour coulissant (20, 120) selon l'une des revendications 1 à 8, **caractérisé en ce que** les creux de réception (31) de la première rangée (R1) comportent respectivement un contour de creux doté d'un chanfrein (45), en particulier un chanfrein (45) précédant le fond de creux, considéré dans la direction d'avance du tambour coulissant (20, 120) et/ou **en ce que** les creux de réception (32) de la deuxième rangée (R2) comportent respectivement un contour de creux doté d'un chanfrein (54), en particulier un chanfrein (54) précédant le fond de creux, considéré dans la direction d'avance du tambour coulissant (20, 120).

10. Tambour coulissant (20, 120) selon l'une des revendications 1 à 9, **caractérisé en ce que**, entre une zone de réception destinée à la réception d'articles en forme de bâton dans les creux de réception (31) de la première rangée (R1) et dans les creux de réception (32) de la deuxième rangée (R2) depuis un tambour coulissant (20, 120) prévu en amont dans la direction d'avance, en particulier un tambour relais, et une zone de transfert pour transférer des articles en forme de bâton déplacés longitudinalement sur le tambour coulissant (20, 120) hors des creux de réception à un tambour coulissant (20, 120) suivant, en particulier un deuxième tambour coulissant, au moins un dispositif de recouvrement (62) étant prévu, en particulier le dispositif de recouvrement comportant un capot pour les creux de réception (31) de la première rangée (R1) et un capot pour les creux de réception (32) de la deuxième rangée (R2).

11. Tambour coulissant (20, 120) selon la revendication 10, **caractérisé en ce que** le dispositif de recouvrement (62), de préférence sur la face interne faisant face aux creux de réception (31, 32) de la première rangée (R1) et / ou de la deuxième rangée (R2), comporte au moins un corps d'arrêt pour les articles en forme de bâton déplacés ou déplaçables axialement longitudinalement dans les creux de réception (31) de la première rangée (R1) et / ou un corps d'arrêt pour les articles en forme de bâton déplacés ou déplaçables axialement longitudinalement dans les creux de réception (32) de la deuxième rangée (R2),
et / ou **en ce qu'**un capot pour les creux de réception (31) de la première rangée (R1) est décalé en direction radiale par rapport à un capot pour les creux de réception (32) de la deuxième rangée (R2) dans la zone des extrémités des creux de réception (31) de la première rangée (R1) et des extrémités des creux de réception (32) de la deuxième rangée (R2), lesquelles sont disposées les unes face aux autres.

12. Utilisation d'un tambour coulissant (20, 120) de l'industrie de traitement du tabac doté de creux de réception pour des articles en forme de bâton de l'industrie de traitement du tabac, selon l'une des revendications 1 à 11 dans un ensemble de tambours pour le transport sur un axe transversal d'articles en forme de bâton de l'industrie de traitement du tabac, en particulier des bâtons de filtre et / ou des morceaux de filtre et / ou des produits segmentés.

13. Utilisation selon la revendication 12, **caractérisée en ce que** le tambour coulissant (20, 120) est formé en tant que premier tambour coulissant de l'ensemble de tambours et que l'ensemble de tambours comporte un deuxième tambour coulissant pour déplacer axialement longitudinalement les articles en forme de bâton dans des creux de réception, les articles en forme de bâton étant transférés ou étant transférables après déplacement axial longitudinal sur le premier tambour coulissant du premier tambour coulissant au deuxième tambour coulissant et les articles en forme de bâton transférés sur le deuxième tambour coulissant pouvant être déplacés ou étant déplacés en direction axiale longitudinale dans les creux de réception du deuxième tambour coulissant, en particulier le deuxième tambour coulissant comportant systématiquement des creux de réception pour les articles en forme de bâton, en particulier au moins une butée, de préférence deux butées, pour les articles en forme de bâton, étant prévue entre les bords extérieurs des creux de réception du deuxième tambour coulissant.

14. Machine de l'industrie de traitement du tabac, en particulier machine de traitement des filtres ou machine de fabrication de filtres, dotée d'un tambour coulissant (20, 120) selon l'une des revendications 1 à 11, de préférence pour un dispositif de fourniture de filtres.

15. Procédé de transport sur un axe transversal d'articles en forme de bâton de l'industrie de traitement du tabac, en particulier des bâtons de filtre et / ou des morceaux de filtres et / ou des produits segmentés, par utilisation d'un tambour coulissant (20, 120) selon l'une des revendications 1 à 11.
